# EUROPÄISCHE PATENTSCHRIFT

(11) **EP 3 221 162 B1**
(45) Veröffentlichungstag und Bekanntmachung des Hinweises auf die Patenterteilung: **13.05.2020**
(21) Anmeldenummer: 15784010.9
(22) Anmeldetag: 16.10.2015
(51) Int. Cl.: B60G 3/26, B60G 11/08, B60G 13/00, B60G 15/06

(54) **ACHSE FÜR RÄDER EINES ZWEISPURIGEN KRAFTFAHRZEUGS UND ZWEISPURIGES KRAFTFAHRZEUG MIT EINER SOLCHEN ACHSE**
AXLE FOR WHEELS OF A DOUBLE-TRACKED MOTOR VEHICLE, AND DOUBLE-TRACKED MOTOR VEHICLE HAVING AN AXLE OF THIS TYPE
ESSIEU DE ROUES D'UN VÉHICULE AUTOMOBILE À DEUX VOIES ET VÉHICULE AUTOMOBILE À DEUX VOIES MUNI DUDIT ESSIEU

(30) Priorität: 19.11.2014 DE 102014223619
(43) Veröffentlichungstag der Anmeldung: 27.09.2017
(73) Patentinhaber: Bayerische Motoren Werke Aktiengesellschaft, 80809 München (DE)
(72) Erfinder: DURKOVIC, Martin, 81929 München (DE); GERBER, Sven, 80807 München (DE); BRENNER, Markus, 52070 Aachen (DE)
(86) Internationale Anmeldenummer: PCT/EP2015/074053
(87) Internationale Veröffentlichungsnummer: WO 2016/078842

(56) Entgegenhaltungen:
- EP-A1- 0 251 850
- EP-A1- 0 630 770
- EP-A2- 0 312 711
- EP-A2- 2 540 533
- DE-A1- 1 480 405
- DE-A1- 4 201 180
- DE-A1-102011 006 874
- DE-A1-102012 221 678
- FR-A1- 2 675 431
- JP-A- H 106 726
- JP-A- H04 193 616

## Beschreibung

Die Erfindung betrifft eine Achse für Räder eines zweispurigen Kraftfahrzeugs, wobei die Achse auf jeder Fahrzeugseite einen Radträger, ein Dämpferbein, einen Querlenker und eine zumindest teilweise seitlich und/oder in Fahrzeuglängsrichtung radführende Querblattfeder aufweist, wobei das Dämpferbein ein Dämpferrohr und einen im Dämpferrohr entlang einer Dämpferlängsachse bewegbaren Dämpferkolben aufweist, wobei der Dämpferbein mit dem Dämpferrohr am Radträger angebunden ist und sich in einem ersten wirksamen Kinematikpunkt am Radträger abstützt, wobei der Querlenker einen radträgerseitigen Endbereich aufweist und mit dem radträgerseitigen Endbereich am Radträger angebunden ist und sich in einem zweiten wirksamen Kinematikpunkt am Radträger abstützt, und wobei sich die Querblattfeder bezogen auf einen funktionsgemäßen Einbauzustand der Achse in einem zweispurigen Kraftfahrzeug, im Wesentlichen in Fahrzeugquerrichtung erstreckt und wenigstens einen radträgerseitigen Endbereich aufweist.

Achsen für zweispurige Kraftfahrzeuge mit Querblattfedern, d.h. mit im Wesentlichen in Fahrzeugquerrichtung verlaufenden Blattfedern, insbesondere mit Querblattfedern, deren Federblätter bezogen auf einen funktionsgemäßen Einbauzustand in einem Fahrzeug in Fahrzeughochrichtung übereinander angeordnet sind, sind aus dem Stand der Technik allgemein bekannt, beispielsweise aus der DE 41 40 236 A1, der DE-OS 25 41 841 oder der DE 10 2007 051 470 A1.

Eine Radaufhängung mit einer Querblattfeder ist außerdem aus der DE 1 480 405 bekannt, welche eine Stoßdämpferanordnung für angetriebene, durch Querblattfedern abgefederte Achsen offenbart.

Ferner offenbart die DE 10 2012 221 678 A1 eine Achse für ein Kraftfahrzeug mit einer Querblattfeder.

Grundsätzlich werden dabei radführende Querblattfedern, d.h. auftretende Kräfte abstützende Querblattfedern, sowie nicht-radführende Querblattfedern, d.h. Querblattfedern die entsprechend nachgiebig gelagert sind, unterschieden. Insbesondere unterscheidet man seitlich radführende bzw. seitlich nicht-radführende Querblattfedern und in Fahrzeuglängsrichtung radführende bzw. in Fahrzeuglängsrichtung nicht-radführende Querblattfedern, d.h. Querblattfedern, die auftretende Quer- bzw. Seitenkräfte abstützen bzw. in Fahrzeugquerrichtung nachgiebig gelagert sind, und Querblattfedern, die auftretende Längskräfte abstützen bzw. in Fahrzeuglängsrichtung nachgiebig gelagert sind.

Als teilweise radführend (seitlich bzw. in Längsrichtung) werden Querblattfedern bezeichnet, welche nur einen Teil der seitlich bzw. in Längsrichtung wirkenden, radführenden Kräfte aufnehmen bzw. abstützen und/oder nur in bestimmten Fahrsituationen seitlich bzw. in Längsrichtung wirkende Kräfte abstützen. D.h. eine (seitlich bzw. in Längsrichtung) teilweise radführende Querblattfeder ist derart gelagert, insbesondere derart am Fahrzeugaufbau und der Radaufhängung angebunden, dass über die Querblattfeder nur ein Teil der Kräfte (Seiten- bzw. Längskräfte) abgestützt werden kann und/oder die Kräfte (Seiten- bzw. Längskräfte) nur in bestimmten Fahrsituationen abgestützt werden können.

Aus der EP 0 312 711 A2 sowie der EP 0 630 770 A1 ist jeweils bekannt, Seiten- und Querkräfte mittels mehrerer Querlenker abzustützen.

Aus der erstgenannten DE 41 40 236 A1 sowie aus der DE-OS 25 41 841 ist jeweils eine Querblattfeder-Achse für ein zweispuriges Kraftfahrzeug bekannt, welche eine seitlich und in Längsrichtung radführende, in zwei zueinander beabstandeten Punkten am Fahrzeugaufbau abgestützte Querblattfeder aufweist. Dabei ist die Querblattfeder mit ihren Enden, d.h. radträgerseitig, jeweils steif, insbesondere formsteif, an einem unteren Querlenker angebunden, d.h. die Querblattfeder verbindet den linken unteren Querlenker mit dem rechten unteren Querlenker.

Aus der DE 10 2007 051 470 A1 geht hervor, dass die Abstützung der Seitenkräfte am Fahrzeugaufbau über die Querblattfeder beispielsweise erreicht werden kann, indem die Querblattfeder zur Abstützung der wirkenden Seitenkräfte über zwei außermittige, in Fahrzeugquerrichtung nahezu steife Lager am Fahrzeugaufbau angebunden ist und zum anderen derart steif am Radträger angebunden bzw. abgestützt ist, beispielsweise durch eine feste Verschraubung mittels einer oder mehreren Schrauben oder über ein Koppelelement in Form eines entsprechend ausgebildeten Gummilagers, dass sie ähnlich wie ein Querlenker wirkt und somit seitlich radführend ist. Durch die steife Anbindung der Blattfeder auch in Fahrzeuglängsrichtung, wirkt sie auch radführend in Längsrichtung.

Derartige Querblattfeder-Achsen eignen sich dabei insbesondere für Achsen, die nach dem Prinzip einer Federbein-Achse aufgebaut sind, insbesondere für Achsen, die nach dem Prinzip einer MacPherson-Federbeinachse aufgebaut sind, d.h. mit sich jeweils radseitig am Radträger abstützenden Dämpferbeinen, die jedoch anstatt eines Federbeins lediglich ein Dämpferbein aufweisen, d.h. die keine um das Dämpferbein angeordnete Schraubenfeder aufweisen. Die Federfunktion kann in diesem Fall von der Querblattfeder übernommen werden. D.h. die Schraubenfeder, die häufig auch als Tragfeder bezeichnet wird, kann entfallen.

Der Entfall der Schraubenfeder hat gegenüber einer klassischen MacPherson-Federbeinachse jedoch grundsätzlich den Nachteil, dass die infolge einer auftretenden Radlast auf das Dämpferbein wirkenden Querkräfte nicht mehr ausgeglichen werden können, denn der Querkraftausgleich wird in der Regel dadurch erreicht, dass die Schraubenfeder entlang ihrer Längsachse, welche auch als Tragfederachse bezeichnet wird, leicht schräg gegenüber der Dämpferachse angestellt wird, so dass der Dämpferkolben beim Ein- und Ausfedern, zumindest in bestimmten Fahrsituationen, nahezu querkraftfrei und infolgedessen mit weniger Reibung als ohne Querkraftausgleich im Dämpferrohr entlang der Dämpferachse bewegt werden kann.

Ein weiteres grundsätzliches Problem bei Achsen mit zumindest teilweise radführenden Querblattfedern (seitlich und/oder in Längsrichtung), die mit ihren Enden jeweils im Wesentlichen steif an einem unteren Querlenker angebunden sind, besteht darin, dass beim Ein- und/oder Ausfedern des Rades die Gelenkverbindung, mit der die Querblattfeder am Querlenker angebunden ist, kinematisch sowohl der Bewegung der Querblattfeder als auch dem unteren Querlenker folgt, obwohl sich der Querlenker und das Ende der Querblattfeder eigentlich auf unterschiedlichen Bahnkurven bewegen, denn der Querlenker und die Querblattfeder drehen sich jeweils um unterschiedliche Anbindungspunkte. Der Querlenker bewegt sich beim Ein- und Ausfedern um seinen fahrzeugaufbauseitigen Anbindungspunkt und die Querblattfeder um den nächstliegenden Anbindungspunkt am Fahrzeugaufbau, welcher nicht mit dem fahrzeugaufbauseitigen Anbindungspunkt des unteren Querlenkers zusammenfällt.

Da die Querblattfeder mit dem Querlenker jedoch steif verbunden ist und die Steifigkeit des Querlenkers in seiner Längsrichtung, d.h. über seine Länge, in der Regel deutlich größer ist als die Steifigkeit der Querblattfeder, bewirken die beim Ein- und Ausfedern auftretenden Kräfte in der Regel eine Verlängerung der Querblattfeder, so dass diese zwangsweise entlang der Bahnkurve des Querlenkers geführt wird. Dadurch kommt es zu einer Verspannung der Querblattfeder, welche mit zunehmenden Ein- bzw. Ausfederweg vergrößert wird, da sich mit zunehmendem Ein- und Ausfederweg die eigentliche Bahnkurvendifferenz vergrößert. Für ein optimales Fahrverhalten ist es jedoch wichtig, dass die Querblattfeder sich beim Ein- und Ausfedern möglichst verspannungsfrei bewegen kann, insbesondere möglichst verspannungsfrei biegen kann. Infolgedessen weist eine Achse, bei welcher die Querblattfeder, um auftretende Seitenkräfte abzustützen, steif am unteren Querlenker angebunden ist, kein optimales Biegeverhalten auf.

Aufgabe der vorliegenden Erfindung ist es somit, eine Achse mit einer zumindest teilweise seitlich und/oder in Fahrzeuglängsrichtung radführenden Querblattfeder für ein zweispuriges Fahrzeug sowie ein zweispuriges Fahrzeug mit einer entsprechenden Achse bereitzustellen, welche zum einen möglichst optimales Biegeverhalten aufweist, d.h. deren Querblattfeder beim Ein- und Ausfedern möglichst wenig verspannt wird, und die gegenüber den aus dem Stand der Technik bekannten Achsen einen verbesserten Ausgleich der auf den Dämpferbein wirkenden und dessen Reibung erhöhenden Querkräfte ermöglicht.

Gelöst wird diese Aufgabe durch eine Achse mit den Merkmalen von Anspruch 1 sowie durch ein zweispuriges Kraftfahrzeug mit den Merkmalen von Anspruch 10. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Eine erfindungsgemäße Achse ist dadurch gekennzeichnet, dass die Querblattfeder mit ihrem radträgerseitigen Endbereich am Dämpferbein angebunden ist und sich in einem dritten wirksamen Kinematikpunkt am Dämpferbein abstützt, wobei die Querblattfeder mit ihrem radträgerseitigen Endbereich im Bereich des Dämpferrohrs am Dämpferbein angebunden ist.

Bei einer erfindungsgemäßen Achse sind dabei das linke Dämpferbein und das rechte Dämpferbein über die Querblattfeder miteinander gekoppelt, insbesondere durch die Querblattfeder miteinander verbunden. Die sich im Wesentlichen in Fahrzeugquerrichtung, d.h. in y-Richtung, erstreckende Querblattfeder kann dabei einteilig über ihre Länge ausgebildet sein, d.h. sich nahezu vom linken Radträger bis zum rechten Radträger hin erstrecken, oder in aus dem Stand der Technik bekannter Weise mehrteilig ausgebildet sein, d.h. in Fahrzeugquerrichtung aus mehreren Querblattfederteilen zusammengesetzt sein.

Eine erfindungsgemäße Achse ist dabei grundsätzlich wie eine Federbein-Achse aufgebaut, insbesondere wie eine MacPherson-Federbein-Achse, die bei Federbeinachsen um das Dämpferbein herum angeordneten Schraubenfedern können jedoch entfallen. D.h. eine erfindungsgemäße Achse weist vorzugsweise lediglich ein Dämpferbein auf jeder Fahrzeugseite auf. Dadurch sind derartige Achsen sind in der Regel weniger komplex und erfordern in vielen Fällen weniger Bauraum als vergleichbare Federbein-Achsen. Außerdem weisen Querblattfeder-Achsen häufig einen Gewichtsvorteil gegenüber Federbein-Achsen auf.

Selbstverständlich ist es theoretisch auch denkbar, eine erfindungsgemäße Achse mit einem Federbein auf jeder Fahrzeugseite anstatt eines Dämpferbeins vorzusehen. Allerdings ist für ein optimales Federverhalten einer solchen Achse eine sorgfältige Abstimmung der einzelnen Federelemente aufeinander erforderlich.

Die Querblattfeder einer erfindungsgemäßen Achse ist dabei zumindest teilweise seitlich radführend und/oder zumindest teilweise radführend in Fahrzeuglängsrichtung ausgebildet. D.h. über die Querblattfeder einer erfindungsgemäßen Achse kann zumindest ein Teil der Seitenkräfte und/oder zumindest ein Teil der Längskräfte abgestützt werden und/oder die Seitenkräfte bzw. die Längskräfte können in bestimmten Fahrsituationen abgestützt werden.

Die Querblattfeder kann aber auch als seitlich radführend und/oder als in Fahrzeuglängsrichtung radführend ausgebildet sein, d.h. derart, dass sämtliche auftretenden Seitenkräfte und/oder sämtliche auftretenden Längskräfte über die Querblattfeder abgestützt werden können.

Durch die Art und Weise, wie die Querblattfeder am Fahrzeugaufbau angebunden werden kann und wie die Querblattfeder am Dämpferbein angebunden ist, d.h. wie die entsprechenden Anbindungen der Querblattfeder ausgestaltet sind, wirkt die Querblattfeder als seitliche und/oder in Fahrzeuglängsrichtung radführende Querblattfeder oder als seitliche und/oder in Fahrzeuglängsrichtung teilweise radführende Querblattfeder. Eine erfindungsgemäße Achse kann dabei sowohl als Vorderachse ausgebildet sein als auch als Hinterachse, wobei die Achse jeweils als lenkbare oder nicht lenkbare Achse ausgebildet sein kann.

Ist eine erfindungsgemäße Achse als lenkbare Achse ausgebildet, sind der erste und der zweite Kinematikpunkt bevorzugt derart angeordnet, dass sie eine Spreizachse definieren, d.h. die Achse, um welche sich bei einer Lenkbewegung das Rad dreht.

Die Querblattfeder einer erfindungsgemäßen Achse kann ein Federblatt oder mehrere Federblätter bzw. eine oder mehrere Federlagen aufweisen, wobei die Querblattfeder bevorzugt mehrere, insbesondere parallel übereinander angeordnete Federblätter aufweist, die besonders bevorzugt ein Blattfederpaket bilden. Vorzugsweise ist die Querblattfeder dabei derart angeordnet, dass die Federblätter, bezogen auf einen funktionsgemäßen Einbauzustand in einem Fahrzeug im Wesentlichen in Fahrzeughochrichtung übereinander angeordnet sind. D.h. bevorzugt sind die einzelnen Federblätter in etwa in z-Richtung gestapelt, vorzugsweise parallel übereinander. Die Querblattfeder kann aber auch leicht geneigt angeordnet werden, d.h. ein wenig um die y-Achse geneigt, so dass nicht nur Vertikalkräfte eine Biegung der Querblattfeder bewirken, sondern auch Längskräfte, wenngleich vorzugsweise nur mit einem deutlich geringeren Anteil.

Die Geometrie der einzelnen Federblätter, insbesondere deren Form sowie deren Dicke und deren Querschnittsverlauf in Fahrzeugquerrichtung, ist dabei bevorzugt derart gewählt und die Blattfederpakete sind derart aufeinander abgestimmt zusammengesetzt, dass sich das gewünschte Federverhalten ergibt.

Die Federblätter können dabei aus gewöhnlichem Federstahl hergestellt sein, aber auch aus faserverstärktem Kunststoff oder dergleichen. Selbstverständlich kann ein Blattfederpaket bzw. die gesamte Querblattfeder auch aus mehreren Federblättern aus unterschiedlichen Werkstoffen zusammengesetzt sein.

Mit einer erfindungsgemäßen Achse können zum einen auf das Dämpferbein wirkende und die Reibung negativ beeinflussende Querkräfte gegenüber aus dem Stand der Technik bekannten Querblattfeder-Achsen, bei denen sich die Querblattfeder am unteren Querlenker abstützt, reduziert werden. Außerdem kann durch die Entkopplung der Querblattfeder vom Querlenker, insbesondere durch die Anbindung der Querblattfeder am Dämpferbein anstatt am Querlenker, eine Verspannung der Querblattfeder beim Ein- und Ausfedern vermieden werden, auch bei einer seitlich und/oder in Fahrzeuglängsrichtung radführenden Querblattfeder.

In einer bevorzugten Ausgestaltung der Erfindung ist die Querblattfeder mit ihrem radträgerseitigen Endbereich im Bereich eines unteren Endes des Dämpferrohrs oder im Bereich eines oberen Endes des Dämpferrohrs am Dämpferbein angebunden.

Da sich eine über den ersten Kinematikpunkt, in dem das Dämpferbein am Radträger angebunden ist, auf das Dämpferbein aufgebrachte Querkraft in einem funktionsgemäßen Einbauzustand, in dem das Dämpferbein mit seinem oberen Ende am Fahrzeugaufbau angebunden ist, sowohl am oberen Ende des Dämpferkolbens abstützt, als auch über die Querblattfeder, ist die Größe der auf den Dämpferkolben wirkende und die Reibung erhöhende Querkraft abhängig von der Höhe bzw. der Position der Anbindung der Querblattfeder am Dämpferbein. D.h. es kommt darauf an, auf welcher Höhe des Dämpferbeins, d.h. wo am Dämpferbein über dessen Länge, der dritte Kinematikpunkt liegt, in welchem die Querblattfeder am Dämpferbein angebunden ist.

D.h., je nach dem wo die Querblattfeder am Dämpferbein angebunden ist, wird eine auf das Dämpferbein wirkende Querkraft mit mehr oder weniger Anteil über die Querblattfeder abgestützt, anstatt über den in einem funktionsgemäßen Einbauzustand mit seinem oberen Ende am Fahrzeugaufbau angebundenen Dämpferkolben. Je näher der dritte Kinematikpunkt dabei am ersten Kinematikpunkt liegt, desto geringer ist die auf den Dämpferkolben wirkende Querkraft, da ein größerer Anteil über die Querblattfeder abgestützt werden kann, d.h. desto besser ist der Querkraftausgleich.

In einer besonders vorteilhaften Ausgestaltung ist die Querblattfeder in Fahrzeughochrichtung, bezogen auf einen funktionsgemäßen Einbauzustand der Achse in einem Kraftfahrzeug, auf Höhe des ersten wirksamen Kinematikpunktes am Dämpferbein angebunden, wobei vorzugsweise der dritte Kinematikpunkt auf Höhe des ersten Kinematikpunktes liegt. Bei einer derartigen Anordnung wird die auf das Dämpferbein wirkende Querkraft nahezu vollständig über die Querblattfeder abgestützt, so dass nahezu keine Querkraft auf den Dämpferkolben wirkt und eine Erhöhung der Reibung im Dämpferbein nahezu vermieden werden kann.

Insbesondere wenn die Anbindung der Querblattfeder auf Höhe des ersten Kinematikpunktes am Dämpferbein nicht möglich ist, beispielsweise weil kein Bauraum zur Verfügung steht, kann es vorteilhaft sein, wenn die Querblattfeder unter Vorspannung am Dämpferbein angebunden wird, bezogen auf einen funktionsgemäßen Einbauzustand der Achse in einem Kraftfahrzeug, vorzugsweise unter Vorspannung mit einem um eine Fahrzeuglängsachse wirkenden Kontermoment, das einer durch auftretende Radlasten entstehenden, zur Fahrzeugmitte hin gerichteten, durch den ersten wirksamen Kinematikpunkt verlaufenden und auf das Dämpferbein wirkenden Querkraft zumindest teilweise entgegenwirkt. Durch ein derartiges Kontermoment wird am Anbindungspunkt des Dämpferkolbens eine der Querkraft entgegen gerichtete Kraftkomponente erzeugt, so dass sich im Ergebnis eine geringere resultierende Querkraft einstellt. Bei entsprechend gewählter, definierter Vorspannung kann die Querkraft in bestimmten Situationen sogar vollständig ausgeglichen werden. Die hierfür erforderliche Vorspannung ist dabei unter anderem von der Lage des Anbindungspunktes der Querblattfeder am Dämpferbein abhängig. D.h. von der Anordnung des dritten Kinematikpunktes.

In einer bevorzugten Ausgestaltung ist die Querblattfeder gelenkig am Dämpferbein angebunden. Besonders bevorzugt mittels eines Gelenks. Das Gelenk ist dabei vorzugsweise ein Kugelgelenk oder ein Drehgelenk, das eine Anbindung unter Vorspannung ermöglicht, insbesondere eine Anbindung unter Vorspannung mit einem um eine Fahrzeuglängsachse wirkenden Kontermoment, das einer durch auftretende Radlasten entstehenden, zur Fahrzeugmitte hin gerichteten, durch den ersten wirksamen Kinematikpunkt verlaufenden und auf das Dämpferbein wirkenden Querkraft zumindest teilweise entgegenwirkt.

Die Anbindung der Querblattfeder am Dämpferbein ist dabei jeweils entsprechend der abzustützenden Kräfte ausgebildet. D.h. derart, dass die Querblattfeder zumindest teilweise seitlich und/oder in Fahrzeuglängsrichtung radführend wirkt.

In einer besonders bevorzugten Weiterbildung bildet die Querblattfeder selbst das Gelenk, wobei dazu der radträgerseitige Endbereich der Querblattfeder als Gelenk ausgebildet ist. Dazu kann die Querblattfeder beispielsweise in ihrem Endbereich abgewinkelt ausgebildet sein, und mit ihrem abgewinkelten Ende am Dämpferbein gelagert sein, so dass sie in diesem Bereich quasi eine Art Scharniergelenk bildet. Mit einer derartigen Querblattfeder bzw. einer derartigen Anbindung lässt sich die Querblattfeder besonders einfach unter Vorspannung am Dämpferbein anbinden. Selbstverständlich kann aber alternativ auch ein separates Scharniergelenk oder dergleichen verwendet werden.

Alternativ oder zusätzlich kann die auf den Dämpferkolben wirkende Querkraft reduziert werden, in dem das Dämpferbein mit dem Dämpferrohr unter Vorspannung am Radträger angebunden wird, bezogen auf einen funktionsgemäßen Einbauzustand der Achse in einem Kraftfahrzeug, vorzugsweise unter Vorspannung mit einem um eine Fahrzeuglängsachse wirkenden Kontermoment, das einer durch auftretende Radlasten entstehenden, zur Fahrzeugmitte hin gerichteten, durch den ersten wirksamen Kinematikpunkt verlaufenden und auf den Dämpferbein wirkenden Querkraft zumindest teilweise entgegenwirkt. Diese Art der Anbindung des Dämpferbeins unter entsprechender Vorspannung am Radträger hat den Vorteil, dass erst gar keine Querkraft in den Dämpfer eingeleitet wird, welche von der Querblattfeder möglichst vollständig abgestützt werden sollte bzw. durch eine entsprechende Vorspannung in der Anbindung der Querblattfeder am Dämpferbein ausgeglichen werden sollte.

Wie eingangs erwähnt, weist eine erfindungsgemäße Achse eine zumindest teilweise seitlich und/oder in Fahrzeuglängsrichtung radführende Querblattfeder auf, wobei die Art und Weise, wie die Querblattfeder am Fahrzeugaufbau angebunden werden kann und wie die Querblattfeder am Dämpferbein angebunden ist, d.h. wie die entsprechenden Anbindungen der Querblattfeder ausgestaltet sind, bestimmt, ob die Querblattfeder als seitliche und/oder in Fahrzeuglängsrichtung radführende Querblattfeder oder als seitliche und/oder in Fahrzeuglängsrichtung teilweise radführende Querblattfeder wirkt.

Da die Querblattfeder an sich für ein möglichst gutes, harmonisches Federverhalten in Fahrzeugquerrichtung, zumindest innerhalb gewisser, definierter Grenzen, möglichst nachgiebig angebunden sein sollte, d.h. derart, dass eine seitliche Ausgleichsbewegung bzw. eine seitliche Verschiebung der Querblattfeder in y-Richtung möglich ist, was einer Abstützung von auftretenden Seitenkräften entgegensteht, kann es in einigen Fällen erforderlich sein, zusätzliche Maßnahmen vorzusehen, welche zum einen die für ein gutes Federverhalten erforderliche seitliche Verschiebung der Querblattfeder innerhalb gewisser, definierter Grenzen ermöglichen, aber gleichzeitig zumindest in bestimmten Fahrsituationen eine Abstützung von auftretenden Seitenkräften über die Querblattfeder.

Als besonders vorteilhaft hat sich in diesem Fall eine erfindungsgemäße Achse herausgestellt, welche jeweils einen Radträger und ein Dämpferbein auf jeder Fahrzeugseite und ein mit der Querblattfeder gekoppeltes und mit dem Fahrzeugaufbau koppelbares Wattgestänge aufweist, wobei die beiden Dämpferbeine über die Querblattfeder miteinander gekoppelt sind, und wobei die Querblattfeder über wenigstens ein Lager am Fahrzeugaufbau anbindbar ist. Dabei ist das Lager zur Abstützung der Querblattfeder in Fahrzeughochrichtung ausgebildet und ermöglicht gleichzeitig beim Ein- und/oder Ausfedern einen Ausgleich einer Bewegung der Querblattfeder in Fahrzeugquerrichtung, wobei das Wattgestänge derart ausgebildet, mit der Querblattfeder gekoppelt und mit dem Fahrzeugaufbau koppelbar ist, dass es in einem funktionsgemäßen Einbauzustand der Achse in einem zweispurigen Kraftfahrzeug eine infolge von auf die Querblattfeder wirkenden Kräften bewirkte Bewegung der Querblattfeder in Fahrzeugquerrichtung verhindert oder auf eine definierte maximale zulässige Querbewegung begrenzt.

Ein derartiges Wattgestänge ist ausführlich in der, am selben Tag von derselben Anmelderin eingereichten DE102014223600.2 (EM27932) beschrieben.

Ist das Wattgestänge derart ausgebildet, mit der Querblattfeder gekoppelt und mit dem Fahrzeugaufbau koppelbar, dass es eine globale Bewegung der Querblattfeder in Fahrzeugquerrichtung verhindert, ist die Achse vorzugsweise derart ausgebildet, insbesondere das Wattgestänge, dass auf die Querblattfeder wirkende Seitenkräften am Fahrzeugaufbau abgestützt werden. D.h., dass in diesem Fall die Querblattfeder seitlich radführend wirkt und auf die Achse über die Räder eingeleitete Seitenkräfte nahezu vollständig am Fahrzeugaufbau abstützt und eine globale Querbewegung und damit die Verschiebung der gesamten Querblattfeder in Fahrzeugquerrichtung durch das Wattgestänge nahezu vollständig blockiert ist. Lediglich das Lager, mit welchem die Querblattfeder unmittelbar am Fahrzeugaufbau abgestützt ist, ermöglicht innerhalb des Lagers eine kleine Ausgleichsbewegung in Fahrzeugquerrichtung, um beim Ein- und Ausfedern eine möglichst verspannungsfreie Biegung der Querblattfeder zu ermöglichen.

Ist das Wattgestänge hingegen derart ausgebildet, mit der Querblattfeder gekoppelt und mit dem Fahrzeugaufbau koppelbar, dass es eine globale Bewegung der Querblattfeder in Fahrzeugquerrichtung auf eine definierte, maximal zulässige Querbewegung begrenzt, ist die Achse vorzugsweise derart ausgebildet, insbesondere das Wattgestänge, dass nach dem Erreichen der definierten, maximal zulässigen Querbewegung der Querblattfeder auf die Querblattfeder wirkende Seitenkräfte am Fahrzeugaufbau abgestützt werden. In diesem Fall wirkt die Querblattfeder nur teilweise seitlich radführend, insbesondere erst, wenn die maximal zulässige Querbewegung der Querblattfeder erreicht ist.

Die Querblattfeder kann in diesem Fall vorzugsweise derart am Fahrzeugbau angebunden werden, dass in einem funktionsgemäßen Einbauzustand der Achse in einem zweispurigen Kraftfahrzeug eine ausreichende Verschiebbarkeit in y-Richtung gewährleistet ist, bevorzugt derart dass die Federwirkung der Querblattfeder nicht behindert wird, wobei die Querblattfeder dazu über wenigstens ein Lager am Fahrzeugaufbau angebunden werden kann.

Das Lager zur Kopplung der Querblattfeder mit dem Fahrzeugaufbau sollte dabei, um die entsprechend gewünschte Federwirkung zu erreichen, zur Abstützung der Querblattfeder in Fahrzeughochrichtung ausgebildet sein und beim Ein- und/oder Ausfedern einen Ausgleich einer Bewegung der Querblattfeder in Fahrzeugquerrichtung ermöglichen.

Je nachdem, ob Längskräfte abgestützt werden sollen, d.h. ob die Querblattfeder radführend in Längsrichtung sein soll, oder ob auch eine Nachgiebigkeit in Fahrzeuglängsrichtung, d.h. in x-Richtung, erwünscht ist, kann die Querblattfeder einer erfindungsgemäßen Achse in Fahrzeuglängsrichtung steif oder entsprechend nachgiebig am Fahrzeugaufbau angebunden werden.

Derartige Lager, welche beim Ein- und/oder Ausfedern einen Ausgleich einer Bewegung der Querblattfeder in Fahrzeugquerrichtung ermöglichen, bei gleichzeitiger Abstützung in Fahrzeughochrichtung und ggf. mit entsprechender Nachgiebigkeit oder Steifigkeit in x-Richtung sind aus dem Stand der Technik grundsätzlich bekannt.

Als besonders geeignet für die Anbindung der Querblattfeder einer erfindungsgemäßen Achse am Fahrzeugaufbau haben sich jedoch die in der von derselben Anmelderin, am gleichen Tag eingereichten DE102014223576.6 (EM28004) beschriebenen Lager herausgestellt.

Ebenfalls als besonders geeignet für die Anbindung der Querblattfeder einer erfindungsgemäßen Achse am Fahrzeugaufbau sind die in der, ebenfalls am gleichen Tag von derselben Anmelderin, eingereichten DE102014223584.7 (EM28029) beschriebenen Lager.

Bevorzugt kann die Querblattfeder jedoch nicht nur über ein einziges vorbeschriebenes Lager mit dem Fahrzeugaufbau gekoppelt werden, sondern über wenigstens zwei solche Lager, insbesondere zwei außermittig angeordnete Lager, bevorzugt über zwei symmetrisch zur Fahrzeugmitte nach außen versetzte Lager. Diese, aus dem Stand der Technik grundsätzlich bekannte Art der Anbindung einer Querblattfeder am Fahrzeugaufbau hat den Vorteil, dass die Querblattfeder bei einer Wankbewegung gleichzeitig als Quer-Stabilisator wirkt. Dadurch können Radlastdifferenzen des linken und des rechten Rades reduziert werden und das Seitenkraftführungspotenzial der Achse kann gegenüber einer Achse mit nur einem Querblattfeder-Lager erhöht werden. Es können selbstverständlich, wie aus dem Stand der Technik ebenfalls bekannt ist, auch zwei außermittige Lagerpaare vorgesehen sein.

Ein erfindungsgemäßes zweispuriges Kraftfahrzeug ist dadurch gekennzeichnet, dass es eine erfindungsgemäße Achse aufweist.

Diese und weitere Merkmale gehen außer aus den Ansprüchen und aus der Beschreibung auch aus den Zeichnungen hervor, wobei die einzelnen Merkmale jeweils für sich allein oder zu mehreren in Form von Unterkombinationen bei einer Ausführungsform der Erfindung verwirklicht sein und vorteilhafte sowie für sich genommen schutzfähige Ausführungen darstellen können, für die hier Schutz beansprucht wird. Alle vorstehend in der Beschreibung sowie nachfolgend in der Figurenbeschreibung im Zusammenhang mit einer erfindungsgemäßen Achse genannten und/oder in den Figuren alleine gezeigten Merkmale und Merkmalskombinationen gelten dabei jeweils nicht nur für die erfindungsgemäße Achse, sondern auch für ein erfindungsgemäßes zweispuriges Kraftfahrzeug und sind jeweils nicht nur in den beschriebenen Merkmalskombinationen verwendbar, sondern auch in anderen technisch ausführbaren Kombinationen oder in Alleinstellung.

Im Folgenden wird die Erfindung anhand von fünf Ausführungsbeispielen beschrieben, wobei die Erfindung dazu in den beigefügten Zeichnungen schematisch dargestellt ist. Die **Fig. 1** bis **4** zeigen dabei zum besseren Verständnis aus dem Stand der Technik bekannte Achskonzepte, **Fig. 5** ein erstes Ausführungsbeispiel einer erfindungsgemäßen Achse, **Fig. 6** ein zweites Ausführungsbeispiel einer erfindungsgemäßen Achse, **Fig. 7** ein drittes Ausführungsbeispiel einer erfindungsgemäßen Achse, **Fig. 8** ein viertes Ausführungsbeispiel einer erfindungsgemäßen Achse und **Fig. 9** ein fünftes Ausführungsbeispiel einer erfindungsgemäßen Achse. **Fig. 10** zeigt einen Schnitt durch ein Ausführungsbeispiel eines Lagers zur Anbindung einer Querblattfeder einer erfindungsgemäßen Achse am Fahrzeugaufbau im Ruhezustand, **Fig. 11** einen Schnitt durch ein weiteres Ausführungsbeispiel eines Lagers zur Anbindung einer Querblattfeder einer erfindungsgemäßen Achse am Fahrzeugaufbau, ebenfalls im Ruhezustand, und **Fig. 12** ein Ausführungsbeispiel zur Anordnung der Lager für die Anbindung der Querblattfeder einer erfindungsgemäßen Achse am Fahrzeugaufbau. Erfindungswesentlich können dabei sämtliche näher beschriebenen Merkmale sein.

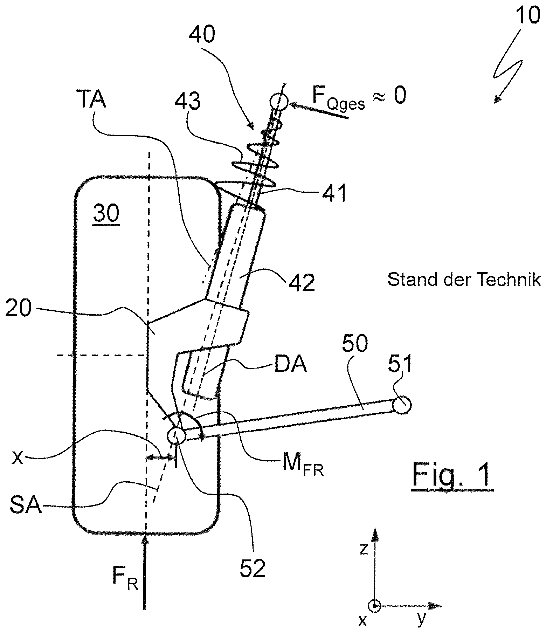

Fig. 1 zeigt eine aus dem Stand der Technik bekannte Federbeinachse 10 welche einen Radträger 20 zur Aufnahme eines Rades 30 der Achse 10 aufweist, an welchem ein Dämpfer 40 mit einem Dämpferrohr 42 und einem Dämpferkolben 41 und einer Schraubenfeder 43 bzw. einer Tragfeder 43, mit welcher der Dämpfer 40 ein Federbein bildet, abgestützt ist. Dabei kann der Dämpfer 40 über seinen oberen Anbindungspunkt am Dämpferkolben 41 am Fahrzeugaufbau angebunden werden. In seinem unteren Bereich stützt sich der Dämpfer 40 mit seinem Dämpferrohr 42 am Radträger 20 ab.

Am Radträger 20 stützt sich ebenfalls ein unterer Querlenker 50 ab, welcher mit seinem radträgerseitigen Ende mittels des Gelenks 52 am Radträger angebunden ist. Der obere Anbindungspunkt des Dämpfers 40 und die Gelenkverbindung 52 definieren dabei bei einer lenkbaren Achse die Spreizachse SA, d.h. die Achse, um welche sich das Rad 30 bei einer Lenkbewegung dreht.

Mit seinem anderen Ende kann der Querlenker über das Gelenk 51 am Fahrzeugaufbau angebunden werden, so dass der Radträger 20 in einem funktionsgemäßen Einbauzustand der Achse 10 in einem zweispurigen Fahrzeug über das Federbein bzw. den Dämpfer 40 sowie den unteren Querlenker 50 am Fahrzeugaufbau abgestützt ist.

Bei der in Fig. 1 dargestellten Federbeinachse bewirkt eine auftretende vertikale Radlast F_{R} ein Einfedern des Rades 30. Dabei wird der Dämpferkolben 41 in das Dämpferrohr 42 entlang der Dämpferachse DA verschoben. Für eine möglichst geringe Reibung und optimales Dämpferverhalten ist es dabei wichtig, dass der Dämpferkolben 41 möglichst querkraftfrei im Dämpferrohr 42 geführt wird. Um das von der Radlast F_{R} erzeugte Moment M_{FR} um den Anbindungspunkt 52, welches aufgrund des Hebels x entsteht und eine Querkraft am oberen Anbindungspunkt des Dämpfers 40 erzeugt, auszugleichen, wird die Schraubenfeder 43 in der Regel geneigt zur Spreizachse SA verbaut. D.h. eine Längsachse TA der Schraubenfeder 43 fällt nicht mit der Spreizachse SA zusammen, sondern ist, um einen entsprechenden Querkraftausgleich zu erreichen, zu dieser geneigt.

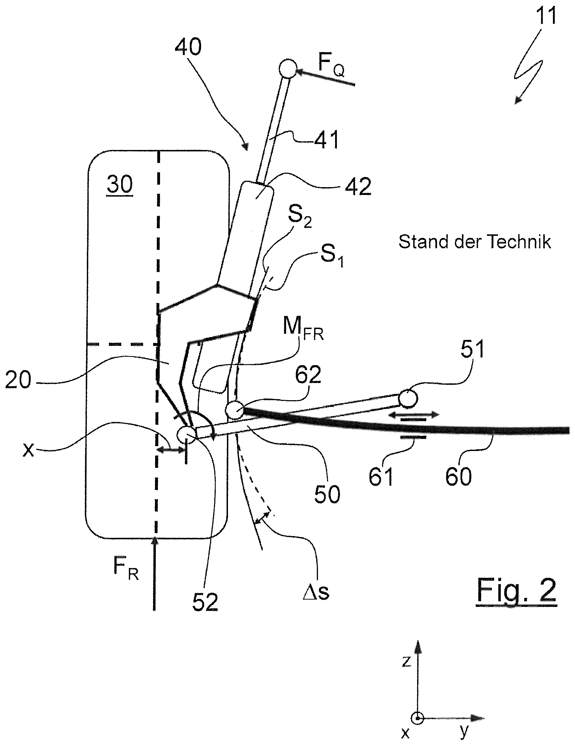

Federbeinachsen haben jedoch den Nachteil, dass sie ein hohes Gewicht erfordern sowie einen nicht unerheblichen Bauraumbedarf aufweisen. Alternativen zur Federbeinachsen sind Querblattfederachsen. Diese sind aus dem Stand der Technik ebenfalls grundsätzlich bekannt, wobei Fig. 2 eine aus dem Stand der Technik grundsätzlich bekannte Querblattfederachse 11 zeigt. Diese weist ebenfalls einen Radträger 20 zur Führung eines Rades 30 auf, sowie einen Dämpfer 40 bzw. ein Dämpferbein 40 mit einem Dämpferrohr 42 und einen Dämpferkolben an der Kolbenstange 41, wobei der Dämpfer 40 sich ebenfalls im unteren Bereich des Dämpferrohrs 42 am Radträger 20 abstützt. Der Radträger 20 kann ebenfalls über einen unteren Querlenker 50, welcher über eine Gelenkverbindung 52 am Radträger angebunden ist, am Fahrzeugaufbau angebunden werden, ebenfalls mittels eines Gelenks 51.

Im Unterschied zu der in Fig. 1 gezeigten Federbeinachse weist diese Achse jedoch keine Schraubenfeder 43 auf, sondern eine Querblattfeder 60, welche mittels einer Gelenkverbindung 62 am unteren Querlenker 50 angebunden ist. Über das Lager 61 ist die Querblattfeder 60 am Fahrzeugaufbau angebunden.

Kommt es nun zu einer auftretenden Radlast F_{R}, erzeugt diese aufgrund des Hebels x ein Moment M_{FR} um das Gelenk 52, welches über den oberen Anbindungspunkt des Dämpfers 40 mit einer Querkraft F_{Q} abgestützt wird, so dass eine Querkraft F_{Q} auf das Dämpferbein 40 wirkt. D.h. mit der in Fig. 2 beschriebenen, aus dem Stand der Technik bekannten Querblattfeder-Achse kann die Querkraftbelastung am Dämpferbein 40 nicht vermieden werden, insbesondere nicht ausgeglichen werden, wie dies bei der in Fig. 1 beschriebenen Federbeinachse 10 durch ein Schrägstellen der Schraubenfeder 43 erreicht werden kann.

Ein weiteres Problem bei der in Fig. 2 beschriebenen Achse besteht darin, dass beim Ein- und/oder Ausfedern des Rades 30 die Gelenkverbindung 62 kinematisch sowohl der Bewegung der Querblattfeder 60 als auch dem unteren Querlenker 50 folgt, obwohl sich der Querlenker 50 und das Ende der Querblattfeder 60 eigentlich auf unterschiedlichen Bahnkurven S₁ und S₂ bewegen, denn der Querlenker 50 und Querblattfeder 60 drehen sich jeweils um unterschiedliche Anbindungspunkte. Der Querlenker 50 bewegt sich beim Ein- und Ausfedern um das Gelenk 51 entlang der Bahnkurve S₂ und die Querblattfeder 60 um das Lager 61 infolge ihrer Durchbiegung auf der Bahnkurve S₁, welche hier gestrichelt angedeutet ist. Der Anbindungspunkt 61 fällt jedoch nicht mit dem fahrzeugseitigen Anbindungspunkt 51 des Querlenkers 50 zusammen.

Da die Querblattfeder 60 mit dem Querlenker 50 über die Gelenkverbindung 62 jedoch steif bzw. starr verbunden ist und die Steifigkeit des Querlenkers 50 in der Regel größer ist als die Steifigkeit der Querblattfeder 60, bewirken die beim Ein- und Ausfedern auftretenden Kräfte in der Regel eine Verlängerung der Querblattfeder 60, so dass diese zwangsweise entlang der Bahnkurve S₂ geführt, wodurch es zu einer Verspannung der Querblattfeder 60 kommen kann und zum Teil auch zu einer Verspannung des Fahrzeugaufbaus, welche mit zunehmenden Ein- bzw. Ausfederweg vergrößert wird, da sich in diesem Fall die Bahnkurvendifferenz Δs zwischen den Bahnkurven S₂ und S₁ vergrößert. Für ein optimales Fahrverhalten sowie für eine möglichst lange Lebensdauer der Querblattfeder 60 sowie der Lagerverbindungen 61 und 62 ist es jedoch wichtig, dass die Querblattfeder 60 sich beim Ein- und Ausfedern möglichst verspannungsfrei bewegen kann.

Um die auf die unterschiedlichen Bahnkurvenverläufe S₁ und S₂ der Querblattfeder 60 und des Querlenkers 50 im Bereich der Gelenkverbindung 62 zurückzuführende Verspannung der Querblattfeder 60 beim Ein- und Ausfedern zu reduzieren, kann die Gelenkverbindung 62 zwar weniger steif bzw. nachgiebig ausgebildet werden. Dies geht jedoch zu Lasten der Seitenkraftabstützung.

Somit ist es mit dieser Achse ohne zusätzliche Maßnahmen nicht möglich, gleichzeitig ein optimales Feder- bzw. Biegeverhalten der Querblattfeder 60 zu erreichen, auftretende Seitenkräfte entsprechend abzustützen und auf das Dämpferbein 40 wirkende Querkräfte auszugleichen.

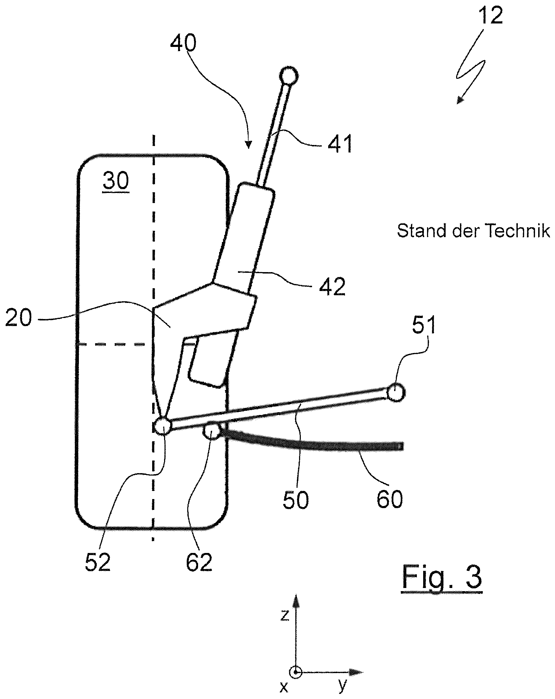

Fig. 3 zeigt ein alternatives Ausführungsbeispiel einer aus dem Stand der Technik bekannten Querblattfederachse 12, wobei diese Achse 12 sich von der in Fig. 2 gezeigten Achse 11 dahingehend unterscheidet, dass der Anbindungspunkt 52 des unteren Querlenkers 50 am Radträger 20 weiter fahrzeugaußen liegt, so dass der Hebel x deutlich kleiner ist, wodurch die auf den Dämpferkolben 41 wirkende Querkraft nahezu vollständig ausgeglichen werden kann. Diese Achse 12 ermöglicht somit zwar einen Querkraftausgleich. Eine Abstützung der Seitenkräfte ohne zusätzliche Maßnahmen bzw. ohne eine Verspannung der Querblattfeder 60 kann jedoch auch mit dieser Achse 12 nicht erreicht werden. Ferner ist es häufig wegen Bauraummangel nicht möglich, den Anbindungspunkt 52 derart weit nach außen zu verlagern.

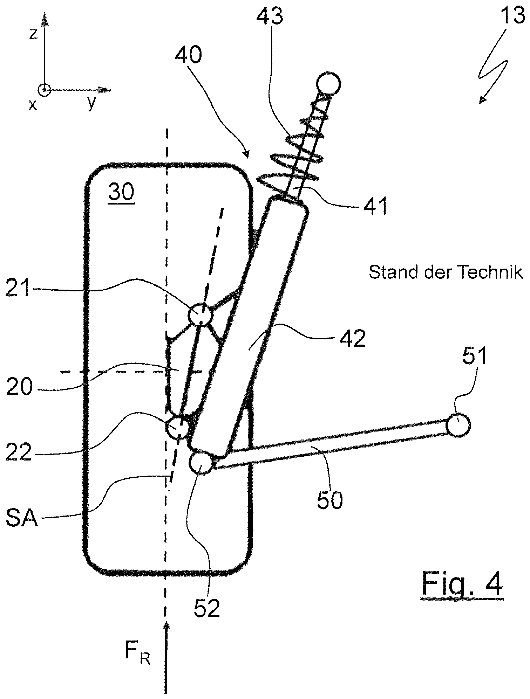

Fig. 4 zeigt ein weiteres Beispiel einer aus dem Stand der Technik bekannten Achse 13, eine sog. Revo-Knuckle-Achse 13, bei welcher der Dämpfer 40 bzw. das Federbein mittels Kugelgelenken 21, 22 drehbar um die Spreizachse SA am Radträger 20 befestigt ist. Durch die Anbindung des Dämpfers 40 über die zwei Kugelgelenkverbindungen 21 und 22 muss der Dämpfer zwar nicht mehr drehbar am Fahrzeugaufbau angebunden werden, da er drehbar am Radträger gelagert ist. Allerdings können auch mit einer Revo-Knuckle-Achse 13 ohne die Schrägstellung einer Schraubenfeder die auftretenden Querkräfte am Dämpfer 40 nicht reduziert werden und nicht die Bauraum- und Gewichtsvorteile einer Querblattfeder-Achse erreicht werden.

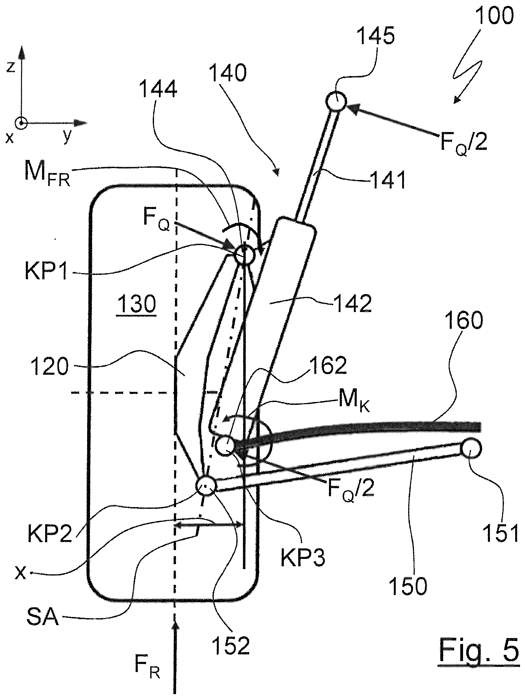

Fig. 5 zeigt ein erstes Ausführungsbeispiel einer erfindungsgemäßen Achse 100 für die Räder 130 eines zweispurigen Kraftfahrzeugs, wobei die Achse 100 auf jeder Fahrzeugseite einen Radträger 120, ein Dämpferbein 140 mit einem Dämpferrohr 142 und einem entlang einer Dämpferlängsachse DA bewegbaren Dämpferkolben 141 mit einer Kolbenstange, einen unteren Querlenker 150 sowie eine Querblattfeder 160 aufweist.

Das Dämpferbein 140 ist gelenkig in einem ersten Kinematikpunkt KP1 am Radträger 120 angebunden und kann über eine Gelenkverbindung 145 mit seinem oberen Ende am Fahrzeugaufbau angebunden werden. Das Dämpferbein 140 stützt sich dabei im ersten wirksamen Kinematikpunkt KP1 am Radträger 120 ab.

Der untere Querlenker 150 ist dabei, wie aus dem Stand der Technik bekannt, über eine Gelenkverbindung 152 am Radträger 120 angebunden und kann über eine Gelenkverbindung 151 am Fahrzeugaufbau angelenkt werden. Die Gelenkverbindung 152 definiert dabei einen zweiten wirksamen Kinematikpunkt KP2, in welchem sich der Querlenker 150 am Radträger 120 abstützt.

Am unteren Ende des Dämpferbeins 140 ist, ebenfalls mittels einer Gelenkverbindung 162 in einem dritten Kinematikpunkt KP3 die Querblattfeder 160 angelenkt, welche sich im Gegensatz zu den aus dem Stand der Technik bekannten Achsen nicht am Radträger 120 oder am Querlenker 150 abstützt, sondern im dritten Kinematikpunkt KP3 am Dämpferbein 140.

Bei einer Anbindung der Querblattfeder 160 am Dämpferbein 140 bewirkt eine auftretende Radlast F_{R}, insbesondere beim Ein- und/oder Ausfedern, aufgrund des immer noch vorhandenen Hebels x, der in diesem Fall durch den Abstand des ersten Kinematikpunktes KP1 von der Radmittelebene definiert ist, zwar immer noch ein Moment M_{FR}, und zwar um den ersten Kinematikpunkt KP1. Die daraus resultierende Querkraft F_{Q} muss aber nicht mehr vollständig am oberen Anbindungspunkt des Dämpferbeins 140, d.h. am oberen Ende 145 der Kolbenstange abgestützt werden, sondern die Querkraft F_{Q} kann sowohl über den Anbindungspunkt 162, in welchem die Querblattfeder 160 sich am Dämpferbein 140 abstützt, als auch über den Anbindungspunkt 145 abgestützt werden. Dadurch kann die Querkraftbelastung im Dämpferbein 140 insgesamt reduziert werden, so dass die Dämpferreibung durch eine derartige Anordnung auch bei einer Querblattfederachse reduziert werden kann. Beispielhaft ist hier angenommen worden, dass sich die Querkraft F_{Q} in etwa auf die Hälfte reduziert. Dies hängt natürlich von den durch die Anordnung der einzelnen Anbindungspunkte definierten Hebelverhältnissen ab.

Ein weiterer Vorteil einer erfindungsgemäßen Achse 100 ist, dass sich aufgrund der Entkopplung der Querblattfeder 160 vom Querlenker 150 nun der Endbereich der Querblattfeder 160 und der untere Querlenker 150, ohne eine Verspannung in der Querblattfeder zu erzeugen, auf unterschiedlichen Bahnkurven bewegen können. Dadurch kann das Federverhalten der Querblattfeder 160 und damit insbesondere das Komfortverhalten der Achse 100 deutlich verbessert werden.

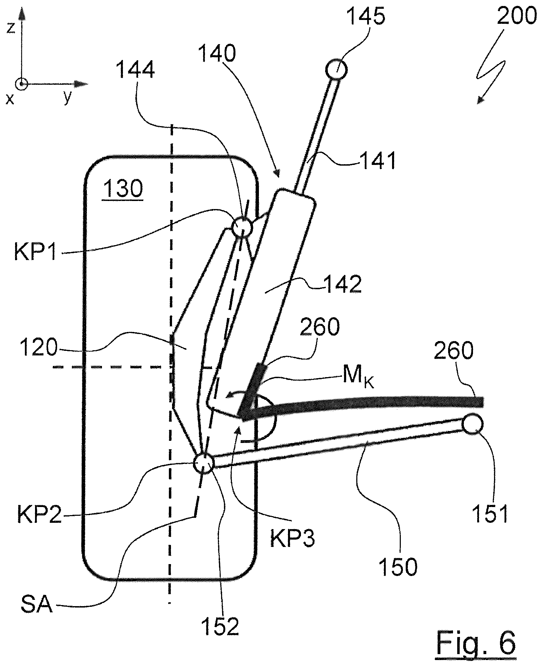

Bei dem in Fig. 5 gezeigten Ausführungsbeispiel ist die Querblattfeder 160 über ein in y-Richtung steifes, aber um eine Achse in Fahrzeuglängsrichtung mit einem Kontermoment M_{K} vorspannbares Gelenk 162 am Dämpferbein 140 angebunden. Selbstverständlich sind hier auch andere Anbindungsmöglichkeiten denkbar, wie beispielsweise Fig. 6 zeigt, in der die Querblattfeder 260 abgewinkelt ausgeführt ist und selber ein Scharniergelenk bildet durch ihren abgewinkelten Endbereich.

Wird die Querblattfeder 260 dabei zusätzlich noch unter Vorspannung, insbesondere unter Vorspannung mit einem, das einer durch auftretende Radlasten F_{R} entstehenden, zur Fahrzeugmitte hin gerichteten, durch den ersten wirksamen Kinematikpunkt KP1 verlaufenden und auf das Dämpferbein 140 wirkenden Querkraft F_{Q} zumindest teilweise entgegenwirkenden Kontermoment M_{K} am Dämpferbein 140 angebunden, kann die auf den Dämpferkolben 142 wirkende Querkraft F_{Q} noch weiter reduziert werden. Vorzugsweise ist die Vorspannung dabei so gewählt, dass in vielen Fahrsituationen eine vollständige Querkraftkompensation erfolgt.

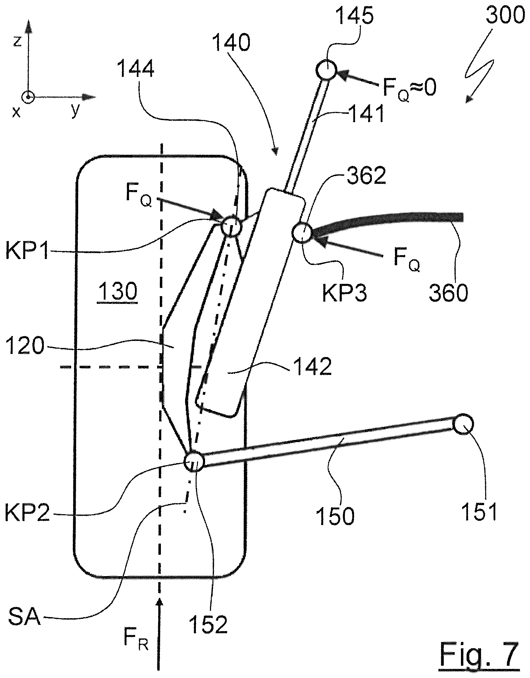

Fig. 7 zeigt ein drittes Ausführungsbeispiel einer erfindungsgemäßen Achse 300, wobei im Unterschied zu den vorherigen in Fig. 5 und 6 gezeigten Ausführungsbeispielen einer erfindungsgemäßen Achse 100 bzw. 200 die Querblattfeder 360 derart mittels eines Gelenks 362 am Dämpferbein 140 angebunden ist, dass der dritte wirksame Kinematikpunkt KP3 auf Höhe des ersten wirksamen Kinematikpunktes KP1 angeordnet ist, so dass eine auftretende Radlast F_{R} und eine daraus resultierende Querkraft F_{Q} unmittelbar über die Querblattfeder 360 abgestützt werden kann und nicht über die Kolbenstange des Dämpferbeins 140 abgestützt werden muss. Dadurch kann auf einfache Art und Weise ein direkter Querkraftausgleich ermöglicht werden.

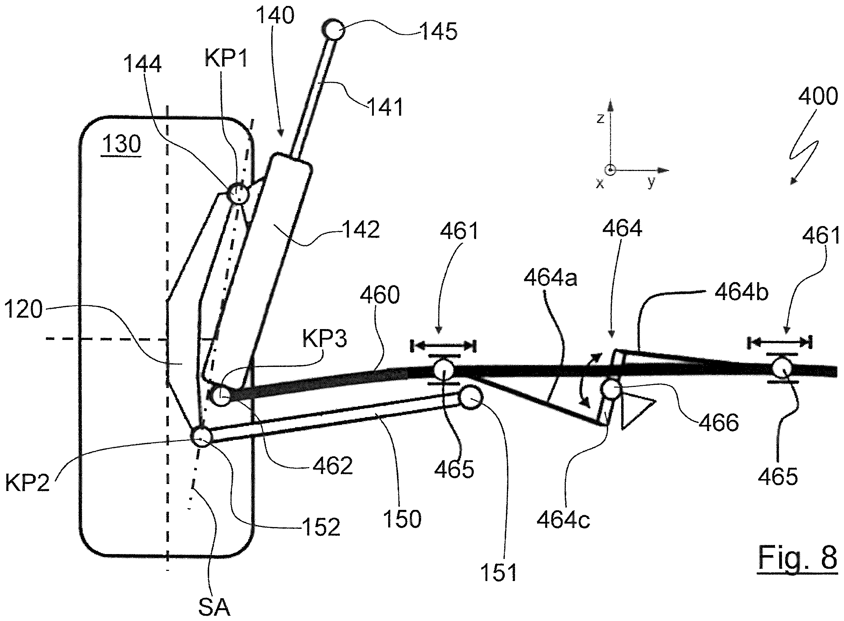

Fig. 8 zeigt ein besonders bevorzugtes Ausführungsbeispiel einer erfindungsgemäßen Achse 400, wobei die in Fig. 8 gezeigte Achse dabei im Wesentlichen der Achse aus Fig. 5 entspricht, jedoch eine in Fahrzeugquerrichtung nachgiebig am Fahrzeugaufbau angebundene Querblattfeder 460 aufweist und zur Abstützung von auftretenden Seitenkräften über die Querblattfeder 460 zusätzlich noch ein Wattgestänge 464 aufweist.

Das Wattgestänge 464 weist einen Zwischenhebel 464c und zwei Stützhebel 464a und 464b auf und kann über ein Lager 466 drehbar um eine Achse in Fahrzeuglängsrichtung am Fahrzeugaufbau angebunden werden. Die Stützhebel 464a und 464b sind dabei über jeweils über Kugelgelenke mit dem Zwischenhebel 464c verbunden. Über die Lager 465 ist das Wattgestänge 464 gelenkig mit der Querblattfeder 460 verbunden. Die Querblattfeder kann jeweils über die beiden Lager 461, welche einen Ausgleich der Bewegung der Querblattfeder 460 in Fahrzeugquerrichtung zulassen, aber die Querblattfeder 460 in Fahrzeughochrichtung abstützen, ebenfalls am Fahrzeugaufbau angebunden werden.

Das Wattgestänge 464 bzw. die Achse 400 ist dabei derart ausgebildet, dass eine auf die Achse 400 wirkende Seitenkraft keine seitliche Verschiebung der Querblattfeder 460 bewirkt. D.h. die Kinematik des Wattgestänges 464 ist derart ausgebildet, dass das Wattgestänge 464 eine globale Querbewegung, d.h. die seitliche Verschiebung, der Querblattfeder 460 blockiert, so dass auf die Querblattfeder 460 wirkende Seitenkräfte über das Wattgestänge 464 am Fahrzeugaufbau abgestützt werden können.

Das Blockieren des Wattgestänges 464 kann beispielsweise realisiert werden, in dem die Scharniergelenke, mittels welcher der Zwischenhebel 464c mit den Stützhebeln 464a und 464b verbunden ist, einen entsprechenden Anschlag aufweisen bzw. derart ausgebildet sind, dass eine Querbewegung der Querblattfeder 460 nicht möglich ist.

Diese erfindungsgemäße Achse 400 hat gegenüber der in den Fig. 5 bis 7 beschriebenen Achsen 100, 200 und 300 den Vorteil, dass in gewissen Grenzen die Bewegung der Querblattfeder 460 infolge einer Biegung der Querblattfeder 460 beim Ein- und Ausfedern ausgeglichen werden kann, aber eine Abstützung der Seitenkräfte über das Wattgestänge 464 erfolgt. Dies wirkt sich fahrdynamisch besonders vorteilhaft aus.

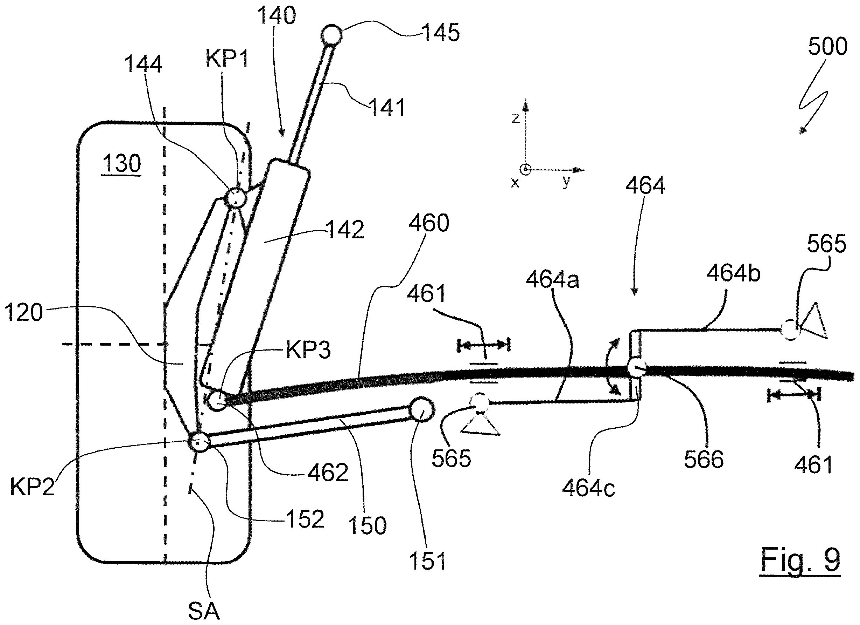

Fig. 9 zeigt ein weiteres Ausführungsbeispiel einer erfindungsgemäßen Achse 500, ebenfalls mit einem Wattgestänge 464, wobei bei diesem Ausführungsbeispiel das Wattgestänge 464 anders an der Querblattfeder 560 sowie am Fahrzeugaufbau angebunden ist bzw. werden kann. Bei diesem Ausführungsbeispiel ist der Zwischenhebel 464c des Wattgestänges 464 nämlich mittels eines Gelenks 566 drehbar um eine Achse in Fahrzeuglängsrichtung an der Querblattfeder 560 angebunden und nicht am Fahrzeugaufbau wie bei der in Fig. 8 beschriebenen erfindungsgemäßen Achse 400.

Außerdem sind die Zwischenhebel 464a und 464b drehbar und gelenkig über die Lager 565 am Fahrzeugaufbau angebunden und nicht an der Querblattfeder 560. Die Querblattfeder 560 ist aber ebenfalls über Lager 461 zur Anbindung am Fahrzeugaufbau ausgebildet, wobei die Lager 461 ebenfalls eine Abstützung von auftretenden Kräften in Fahrzeughochrichtung ermöglichen aber nicht in Fahrzeugquerrichtung, sondern eine Ausgleichbewegung der Querblattfeder 560 in Fahrzeugquerrichtung.

Für ausführliche Erläuterungen zur Funktionsweise der beschriebenen Wattgestänge wird auf die DE102014223600.2 (EM27932) derselben Anmelderin verwiesen, die am selben Tag eingereicht worden ist.

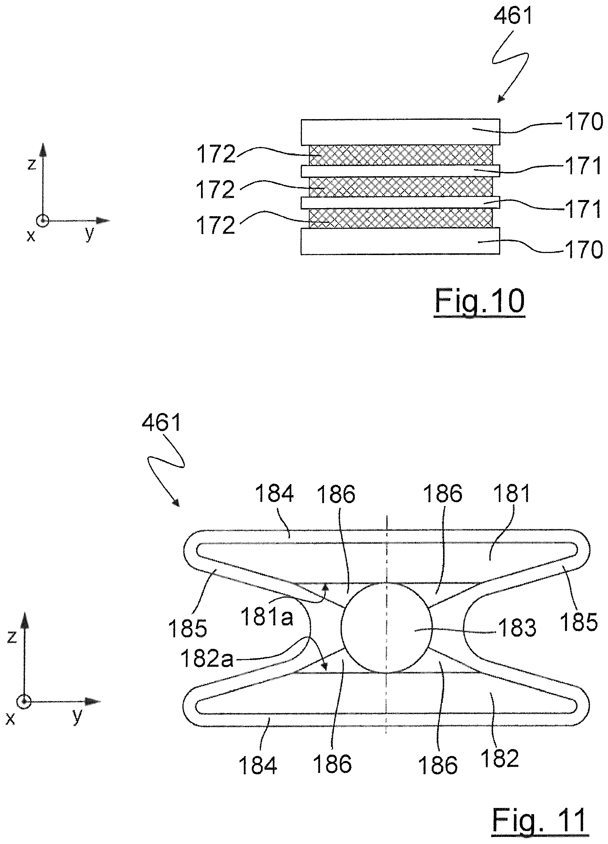

Fig. 10 zeigt, wie in einem funktionsgemäßen Einbauzustand orientiert, schematisch einen Schnitt durch eine beispielhafte Ausführungsform eines vorbeschriebenen Lagers 461 (vgl. Fig. 8 und 9), welches sich besonders gut zur Anbindung der Querblattfeder 460 einer erfindungsgemäßen Achse am Fahrzeugaufbau eignet und das ausführlich in der eingangs erwähnten, auf dieselbe Anmelderin angemeldete, am gleichen Tag eingereichte DE102014223576.6 (EM28004) beschrieben ist.

Dieses zum besseren Verständnis beispielhaft dargestellte Lager 461 ist in Fig. 10 im Ruhezustand abgebildet, d.h. ohne auf das Lager 461 in Längs- u Querrichtung wirkende Scherkräfte F_{Q}. Es weist eine oberste und eine unterste Lagerschicht 170 aus Metall auf, in diesem Fall aus Stahl, welche steif in Hochrichtung, Längsrichtung und Querrichtung ist, bezogen auf einen funktionsgemäßen Einbauzustand des Lagers 461 in einem Fahrzeug. Des Weiteren weist das Lager 461 zwei Zwischenschichten 171 als Lagerschichten auf, welche ebenfalls aus Metall und ebenfalls steif in Hochrichtung, Längsrichtung und in Querrichtung sind. Die Lagerschichten 172, die zwischen den Lagerschichten 170, 171 aus Metall angeordnet sind, sind aus einem Elastomer gebildet und nachgiebig bzw. weich in Querrichtung und weich in Längsrichtung ausgebildet. Die metallischen Lagerschichten 170, 171 sind dabei jeweils fest mit den benachbarten Elastomerschichten 172 verbunden. Die Schichtdicken der einzelnen Lagerschichten sind dabei derart gewählt, dass sich in allen drei Raumrichtungen die gewünschten Steifigkeiten einstellen.

Durch den schichtartigen Aufbau des Lagers 461 mit Lagerschichten aus Metall 170, 171 und Lagerschichten aus einem Elastomer 172, die sandwichartig abwechselnd übereinander angeordnet sind und die wie elastische Gleitebenen wirken, weist das Lager 461 eine hohe Elastizität in Querrichtung (y-Richtung) und in Längsrichtung (x-Richtung) auf und ist gleichzeitig steif in Hochrichtung (z-Richtung). Die zwischen den Metallschichten 170, 171 angeordneten Elastomerschichten 172 ermöglichen die Scherbewegung und die mit den Elastomerschichten 172 fest verbundenen Metallschichten 170, 171 bewirken eine entsprechende Steifigkeit in Hochrichtung.

Dabei ist das beispielhaft beschriebene Lager 461 im Wesentlichen flächig aufgebaut und weist in allen drei Raumebenen einen nahezu annähernd rechteckigen Querschnitt auf. Dadurch, dass das Lager 461 eine Scherbewegung in Längs- und Querrichtung ermöglicht, kann in einem funktionsgemäßen Einbauzustand des Lagers 461 eine Bewegung der Querblattfeder 460 in Fahrzeuglängs- und Fahrzeugquerrichtung ausgeglichen werden. Dadurch kann eine Verspannung der Querblattfeder 460 infolge der Durchbiegung beim Ein- und Ausfedern vermieden werden, und somit ein verbessertes Federverhalten der Querblattfeder 460 und damit ein verbessertes Fahrgefühl erreicht werden.

Fig. 11 zeigt einen Schnitt in Fahrzeugquerrichtung durch ein alternatives Ausführungsbeispiel eines Lagers 461, welches sich ebenfalls besonders gut zur Anbindung der Querblattfeder 460 einer erfindungsgemäßen Achse am Fahrzeugaufbau eignet und das ausführlich in der in der vorgenannten, auf dieselbe Anmelderin angemeldete, am gleichen Tag eingereichte DE102014223584.7 (EM28029), beschrieben ist.

Dieses Ausführungsbeispiel eines Lagers 461 in Form eines Rollenlagers, das ebenfalls orientiert wie in einem funktionsgemäßen Einbauzustand dargestellt ist, weist eine obere Lagerplatte 181 aus Metall auf, in diesem Fall aus gehärtetem Stahl, eine untere Lagerplatte 182, ebenfalls aus gehärtetem Stahl, sowie einen zylinderförmigen Wälzkörper 183 in Form einer Rolle 183, der zwischen den beiden Lagerplatten 181 und 182 angeordnet ist und ebenfalls aus gehärtetem Stahl ausgebildet ist. Dabei weisen die obere Lagerplatte 181 und die untere Lagerplatte 182 jeweils eine dem Wälzkörper 183 zugewandte Kontaktfläche 181a bzw. 182a auf, auf welcher der Wälzkörper 183 jeweils abwälzen kann.

Bei diesem Rollenlager mit einer zylindrischen Rolle 183 als Wälzkörper 183 handelt es sich im Gegensatz zu dem in Fig. 10 gezeigten Lager um ein bewegliches Linienlager, bei dem der Wälzkörper 183 jeweils auftretende Kräfte in Hochrichtung, d.h. in z-Richtung, bzw. in Fahrzeughochrichtung, bezogen auf einen funktionsgemäßen Einbauzustand in einem Kraftfahrzeug, jeweils entlang einer, in diesem Fall senkrecht zur Zeichenebene bzw. in x-Richtung verlaufenden Kontaktlinie an der oberen Lagerplatte 181 bzw. der unteren Lagerplatte 182 abstützt.

Da sich beim Abwälzen des Wälzkörpers 183 auf den Kontaktflächen 181 a und 182a der beiden Lagerplatten 181 und 182 die Kontaktlinie jeweils seitlich bewegt, d.h. in diesem Fall in y-Richtung bzw. in einem funktionsgemäßen Einbauzustand in einem Kraftfahrzeug in Fahrzeugquerrichtung, wird ein derartiges Lager auch als ein bewegliches Linienlager bezeichnet.

Auf einer von der Kontaktfläche 181a bzw. 182a abgewandten Seite der oberen Lagerplatte 181 sowie der unteren Lagerplatte 182 weist das Lager jeweils eine Elastomerschicht 184 auf. Die Elastomerschicht 184 ist dabei derart ausgebildet ist, dass sie in einem funktionsgemäßen Einbauzustand des Lagers in einem Kraftfahrzeug einen Ausgleich einer Veränderung eines Abstandes der beiden Lagerplatten 181 und 182 zueinander ermöglicht und damit einen Ausgleich sich infolge einer Bewegung der Querblattfeder 460 und der damit resultierenden Ausgleichsbewegung des Lagers ändernden Lagerhöhe.

Des Weiteren weist das Lager jeweils seitlich ein Elastomer 185 auf, das bei diesem Ausführungsbeispiel an den Wälzkörper 183 anvulkanisiert ist, und dem Wälzkörper 183 gegen Herausfallen sichert, insbesondere gegen ein seitliches Herausfallen. Dabei muss das Elastomer 185 nicht mit dem Wälzkörper 183 verbunden sein, dies ist jedoch besonders vorteilhaft.

Bei diesem Ausführungsbeispiel ist die Elastomerschicht 184, welche einen Ausgleich einer Veränderung der Lagerhöhe ermöglicht und das Elastomer 185, welches die beiden Lagerplatten 181 und 182 miteinander verbindet und den Wälzkörper 183 gegen Herausfallen sichert, einstückig ausgebildet, d.h. umlaufend.

Bei diesem Ausführungsbeispiel sind sowohl die Kontaktfläche 181a der oberen Lagerplatte 181 als auch die Kontaktfläche 182a der unteren Lagerplatte 182 eben ausgebildet. Ferner weist das Lager entsprechende, hohle Zwischenräume 186 auf, so dass das Abwälzen des Wälzkörpers 183 nicht durch das Elastomer 185 behindert wird und eine entsprechende Ausgleichsbewegung des Lagers ermöglicht wird.

Dadurch, dass die beiden Lagerplatten 181 und 182 jeweils nur über das Elastomer 15 miteinander verbunden sind, können die Lagerplatten 181 und 182 außerdem zueinander geneigt werden. Ist das Lager mit seiner Unterseite beispielsweise auf einer Querblattfeder befestigt und mit seiner Oberseite am Fahrzeugaufbau, kann die untere Lagerplatte 182 bei einer Biegung der Querblattfeder der Neigung der Querblattfeder folgen. Dadurch kann eine Biegung der Querblattfeder noch besser ausgeglichen werden.

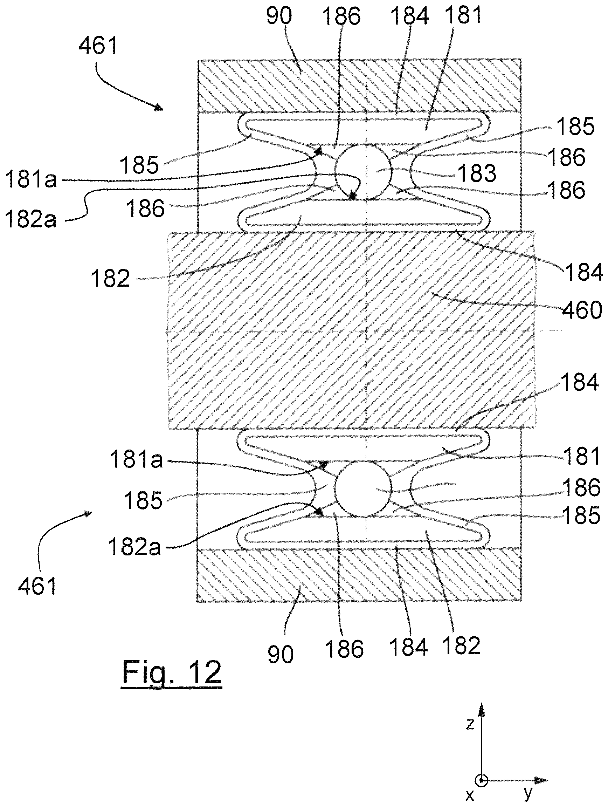

Fig. 12 ist ein Ausführungsbeispiel zur Anordnung der Lager 461 zur Anbindung der Querblattfeder 460 einer erfindungsgemäßen Achse dargestellt, wobei die Anordnung am Beispiel des in Fig. 11 beschriebenen Lagers 461 näher erläutert wird. Selbstverständlich können auch andere Lager derart angeordnet werden, beispielsweise das in Fig. 10 beschriebene Lager oder noch andere Ausführungsformen.

Fig. 12 zeigt in vergrößerter Darstellung einen Schnitt durch eine beispielhafte Anordnung der Lager 461 zur Anbindung der Querblattfeder 460 mit einem Lagerpaar mit zwei übereinander angeordneten Lagern 461, wobei zur Anbindung am Fahrzeugaufbau ein Halter 90 bzw. ein Haltebügel 90 vorgesehen ist, welcher C-förmig die beiden Lager 461 und die sich dazwischen erstreckende Querblattfeder 460 umschließt und der am nicht dargestellten Fahrzeugbau befestigt werden kann. Vorzugsweise ist der C-förmige Haltebügel 90 entsprechend federnd bzw. nachgiebig ausgestaltet, um das bei einigen Lagern, insbesondere dem vorbeschriebenen Rollenlager, zum Teil auftretende "Pumpen" der Lager, d.h. die Veränderung des Abstands jeweils zwischen der oberen Lagerplatte 181 und der unteren Lagerplatte 182 bzw. deren Kontaktflächen 181a und 182a, auszugleichen. Bei entsprechender, geeigneter Ausgestaltung des Haltebügels 90 kann die Elastomerschicht 184 in einigen Fällen sogar ganz entfallen.

Selbstverständlich ist eine Vielzahl an Abwandlungen, insbesondere von konstruktiven Abwandlungen, zu dem erläuterten Ausführungsbeispiel möglich, ohne den Inhalt der Patentansprüche zu verlassen.

### Bezugszeichenliste:

- 10: MacPherson-Federbeinachse aus dem Stand der Technik
- 11: erstes Ausführungsbeispiels einer aus dem Stand der Technik bekannten Querblattfeder-Achse
- 12: zweites Ausführungsbeispiels einer aus dem Stand der Technik bekannten Querblattfeder-Achse
- 13: Revo-Knuckle-Achse (Stand der Technik)
- 20: Radträger
- 21: erster Anbindungspunkt des Federbeins am Radträger
- 22: zweiter Anbindungspunkt des Federbeins am Radträger
- 30: Rad
- 40: Dämpfer
- 41: Dämpferkolben
- 42: Dämpferrohr
- 43: Schraubenfeder bzw. Tragfeder
- 50: unterer Querlenker
- 51: fahrzeugaufbauseitiger Anbindungspunkt des Querlenkers
- 52: radträgerseitiger Anbindungspunkt des Querlenkers
- 60: Querblattfeder
- 61: Lager zur Anbindung der Querblattfeder am Fahrzeugaufbau
- 62: Anbindung der Querblattfeder am Querlenker
- 100, 200, 300, 400, 500: erfindungsgemäße Achse
- 120: Radträger
- 130: Rad
- 140: Dämpferbein
- 141: Dämpferkolben
- 142: Dämpferrohr
- 144: Anbindung des Dämpferbeins am Radträger
- 145: Anbindung des Dämpferbeins am Fahrzeugaufbau
- 150: unterer Querlenker
- 151: fahrzeugaufbauseitiger Anbindungspunkt des Querlenkers
- 152: radträgerseitiger Anbindungspunkt des Querlenkers
- 160,260, 360, 460, 560: Querblattfeder
- 461: Lager zur Anbindung der Querblattfeder am Fahrzeugaufbau
- 162, 362, 462: Anbindung der Querblattfeder am Dämpferbein
- 464a: Stützhebel des Wattgestänges
- 464b: Stützhebel des Wattgestänges
- 464c: Zwischenhebel des Wattgestänges
- 465: Anbindung des Stützhebel an der Querblattfeder
- 466: Anbindung des Zwischenhebels am Fahrzeugaufbau
- 565: Anbindung des Stützhebel am Fahrzeugaufbau
- 566: Anbindung des Zwischenhebels an der Querblattfeder
- DA: Dämpferlängsachse
- F_{R}: Radlast
- F_{Q}: Querkraft
- KP1: erster, wirksamer Kinematikpunkt
- KP2: zweiter, wirksamer Kinematikpunkt
- KP3: dritter, wirksamer Kinematikpunkt
- M_{FR}: durch Radlast induziertes und Querkraft erzeugendes Moment
- M_{K}: Kontermoment
- TA: Tragfederachse
- S₁: eigentliche Bahnkurve des Querblattfederendes
- S₂: Bahnkurve des Querlenkers im Anbindungspunkt 62
- SA: Spreizachse
- x: Radlast-Hebelarm
- Δs: Bahnkurvendifferenz

## Patentansprüche

1. Achse (100, 200, 300, 400, 500) für Räder (130) eines zweispurigen Kraftfahrzeugs, wobei die Achse (100, 200, 300, 400, 500) auf jeder Fahrzeugseite einen Radträger (120), ein Dämpferbein (140), einen Querlenker (150) und eine zumindest teilweise seitlich und/oder in Fahrzeuglängsrichtung radführende Querblattfeder (160, 260, 360, 460, 560) aufweist, wobei das Dämpferbein (140) ein Dämpferrohr (142) und einen im Dämpferrohr (142) entlang einer Dämpferlängsachse (DA) bewegbaren Dämpferkolben (141) aufweist, wobei das Dämpferbein (140) mit dem Dämpferrohr (142) am Radträger (120) angebunden ist und sich in einem ersten wirksamen Kinematikpunkt (KP1) am Radträger (120) abstützt, wobei der Querlenker (150) einen radträgerseitigen Endbereich aufweist und mit dem radträgerseitigen Endbereich am Radträger (120) angebunden ist und sich in einem zweiten wirksamen Kinematikpunkt (KP2) am Radträger abstützt, und wobei sich die Querblattfeder (160, 260, 360, 460, 560) bezogen auf einen funktionsgemäßen Einbauzustand der Achse (100, 200, 300, 400, 500) in einem zweispurigen Kraftfahrzeug, im Wesentlichen in Fahrzeugquerrichtung (y) erstreckt und wenigstens einen radträgerseitigen Endbereich aufweist,
**dadurch gekennzeichnet, dass** die Querblattfeder (160, 260, 360, 460, 560) mit ihrem radträgerseitigen Endbereich am Dämpferbein (140) angebunden ist und sich in einem dritten wirksamen Kinematikpunkt (KP3) am Dämpferbein (140) abstützt,
wobei die Querblattfeder (160, 260, 360, 460, 560) mit ihrem radträgerseitigen Endbereich im Bereich des Dämpferrohrs (142) am Dämpferbein (140) angebunden ist.

2. Achse (100, 200, 300, 400, 500) nach Anspruch 1, **dadurch gekennzeichnet, dass** die Querblattfeder (160, 260, 360, 460, 560) im Bereich eines unteren Endes des Dämpferrohrs (142) oder im Bereich eines oberen Endes des Dämpferrohrs (142) am Dämpferbein (140) angebunden ist.

3. Achse (300) nach Anspruch 1 oder 2, **dadurch gekennzeichnet, dass** die Querblattfeder (360) in Fahrzeughochrichtung, bezogen auf einen funktionsgemäßen Einbauzustand der Achse (300) in einem Kraftfahrzeug, auf Höhe des ersten wirksamen Kinematikpunktes (KP1) am Dämpferbein (140) angebunden ist, wobei vorzugsweise der dritte Kinematikpunkt (KP3) auf Höhe des ersten Kinematikpunktes (KP1) liegt.

4. Achse (100, 200, 300, 400, 500) nach einem der vorgenannten Ansprüche, **dadurch gekennzeichnet, dass** die Querblattfeder (160, 260, 360, 460, 560) unter Vorspannung am Dämpferbein (140) angebunden ist, bezogen auf einen funktionsgemäßen Einbauzustand der Achse (100, 200, 300, 400, 500) in einem Kraftfahrzeug, vorzugsweise unter Vorspannung mit einem um eine Fahrzeuglängsachse (x) wirkenden Kontermoment (M_{K}), das einer durch auftretende Radlasten (F_{R}) entstehenden, zur Fahrzeugmitte hin gerichteten, durch den ersten wirksamen Kinematikpunkt (KP1) verlaufenden und auf das Dämpferbein (140) wirkenden Querkraft (F_{Q}) zumindest teilweise entgegenwirkt.

5. Achse (100, 200, 300, 400, 500) nach einem der vorgenannten Ansprüche, **dadurch gekennzeichnet, dass** die Querblattfeder (160, 260, 360, 460, 560) gelenkig am Dämpferbein (140) angebunden ist.

6. Achse (100, 300, 400, 500) nach Anspruch 5, **dadurch gekennzeichnet, dass** die Querblattfeder (160, 360, 460, 560) mittels eines Gelenks (162, 362, 462) gelenkig am Dämpferbein (140) angebunden ist, wobei das Gelenk (162, 362, 462) vorzugsweise ein Kugelgelenk oder ein Drehgelenk ist, das eine Anbindung unter Vorspannung ermöglicht, insbesondere eine Anbindung unter Vorspannung mit einem um eine Fahrzeuglängsachse (x) wirkenden Kontermoment (M_{K}), das einer durch auftretende Radlasten (F_{R}) entstehenden, zur Fahrzeugmitte hin gerichteten, durch den ersten wirksamen Kinematikpunkt (KP1) verlaufenden und auf das Dämpferbein (140) wirkenden Querkraft (F_{Q}) zumindest teilweise entgegenwirkt.

7. Achse (200) nach Anspruch 5, **dadurch gekennzeichnet, dass** die Querblattfeder (260) mittels eines Gelenks am Dämpferbein (140) angebunden ist, wobei die Querblattfeder (260) selbst das Gelenk bildet, wobei dazu der radträgerseitige Endbereich der Querblattfeder (260) als Gelenk ausgebildet ist.

8. Achse (100, 200, 300, 400, 500) nach einem der vorgenannten Ansprüche, **dadurch gekennzeichnet, dass** das Dämpferbein (140) mit dem Dämpferrohr (142) unter Vorspannung am Radträger (120) angebunden ist, bezogen auf einen funktionsgemäßen Einbauzustand der Achse (100, 200, 300, 400, 500) in einem Kraftfahrzeug, vorzugsweise unter Vorspannung mit einem um eine Fahrzeuglängsachse (x) wirkenden Kontermoment (M_{K}), das einer durch auftretende Radlasten (F_{R}) entstehenden, zur Fahrzeugmitte hin gerichteten, durch den ersten wirksamen Kinematikpunkt (KP1) verlaufenden und auf das Dämpferbein (140) wirkenden Querkraft (F_{Q}) zumindest teilweise entgegenwirkt.

9. Achse (400, 500) nach einem der vorgenannten Ansprüche, **dadurch gekennzeichnet, dass** die Achse (400, 500) jeweils einen Radträger (120) und ein Dämpferbein (140) auf jeder Fahrzeugseite und ein mit der Querblattfeder (460, 560) gekoppeltes und mit dem Fahrzeugaufbau koppelbares Wattgestänge aufweist, wobei die beiden Dämpferbeine (140) über die Querblattfeder (460, 560) miteinander gekoppelt sind, und wobei die Querblattfeder (460, 560) über wenigstens ein Lager (461) am Fahrzeugaufbau anbindbar ist, wobei das Lager (461) zur Abstützung der Querblattfeder (160, 260, 360, 460, 560) in Fahrzeughochrichtung (z) ausgebildet ist und gleichzeitig beim Ein- und/oder Ausfedern einen Ausgleich einer Bewegung der Querblattfeder (460, 560) in Fahrzeugquerrichtung (y) ermöglicht, wobei das Wattgestänge derart ausgebildet, mit der Querblattfeder (460, 560) gekoppelt und mit dem Fahrzeugaufbau koppelbar ist, dass es in einem funktionsgemäßen Einbauzustand der Achse (400, 500) in einem zweispurigen Kraftfahrzeug eine infolge von auf die Querblattfeder (460, 560) wirkenden Kräften bewirkte Bewegung der Querblattfeder (460, 560) in Fahrzeugquerrichtung (y) verhindert oder auf eine definierte, maximal zulässige Querbewegung begrenzt.

10. Zweispuriges Kraftfahrzeug mit einer Achse (100, 200, 300, 400, 500), **dadurch gekennzeichnet, dass** die Achse (100, 200, 300, 400, 500) nach einem der Ansprüche 1 bis 9 ausgebildet ist.

## Claims

1. An axle (100, 200, 300, 400, 500) for wheels (130) of a two-track motor vehicle, the axle (100, 200, 300, 400, 500) having, on each side of the vehicle, a wheel carrier (120), a damper strut (140), a transverse link (150), and a transverse leaf spring (160, 260, 360, 460, 560) at least partially guiding a wheel laterally and/or in a vehicle longitudinal direction, the damper strut (140) having a damper tube (142) and a damper piston (142) which is movable in the damper tube (142) along a damper longitudinal axis (DA), the damper strut (140) being attached by the damper tube (142) to the wheel carrier (120) and being supported at a first effective kinematic point (KP1) on the wheel carrier (120), the transverse link (150) having a wheel-carrier-side end region and being attached by the wheel-carrier-side end region to the wheel carrier (120) and being supported at a second effective kinematic point (KP2) on the wheel carrier, and, based on a functionally installed state of the axle (100, 200, 300, 400, 500) in a two-track motor vehicle, the transverse leaf spring (160, 260, 360, 460, 560) extending substantially in a vehicle transverse direction (y) and having at least one wheel-carrier-side end region,
**characterised in that** the transverse leaf spring (160, 260, 360, 460, 560) is attached by its wheel-carrier-side end region to the damper strut (140) and is supported at a third effective kinematic point (KP3) on the damper strut (140),
the transverse leaf spring (160, 260, 360, 460, 560) being attached by its wheel-carrier-side end region to the damper strut (140) in the region of the damper tube (142).

2. An axle (100, 200, 300, 400, 500) according to claim 1, **characterised in that** the transverse leaf spring (160, 260, 360, 460, 560) is attached to the damper strut (140) in the region of a lower end of the damper tube (142) or in the region of an upper end of the damper tube (142).

3. An axle (300) according to claim 1 or 2, **characterised in that**, in the vehicle vertical direction, based on a functionally installed state of the axle (300) in a motor vehicle, the transverse leaf spring (360) is attached to the damper strut (140) at the height of the first effective kinematic point (KP1), the third kinematic point (KP3) preferably being situated at the height of the first kinematic point (KP1).

4. An axle (100, 200, 300, 400, 500) according to one of the preceding claims, **characterised in that** the transverse leaf spring (160, 260, 360, 460, 560) is attached under preload to the damper strut (140), based on a functionally installed state of the axle (100, 200, 300, 400, 500) in a motor vehicle, preferably under preload with a counter moment (M_{K}) which acts about a vehicle longitudinal axis (x) and which at least partially counteracts a transverse force (F_{Q}) generated owing to occurring wheel loads (F_{R}) and directed towards the vehicle centre and running through the first effective kinematic point (KP1) and acting on the damper strut (140) .

5. An axle (100, 200, 300, 400, 500) according to one of the preceding claims, **characterised in that** the transverse leaf spring (160, 260, 360, 460, 560) is attached in articulated fashion to the damper strut (140) .

6. An axle (100, 300, 400, 500) according to claim 5, **characterised in that** the transverse leaf spring (160, 360, 460, 560) is attached in articulated fashion to the damper strut (140) by means of a joint (162, 362, 462), the joint (162, 362, 462) preferably being a ball joint or a rotary joint which permits an attachment under preload, especially an attachment under preload with a counter moment (M_{K}) which acts about a vehicle longitudinal axis (x) and which at least partially counteracts a transverse force (F_{Q}) generated owing to occurring wheel loads (F_{R}) and directed towards the vehicle centre and running through the first effective kinematic point (KP1) and acting on the damper strut (140).

7. An axle (200) according to claim 5, **characterised in that** the transverse leaf spring (260) is attached to the damper strut (140) by means of a joint, the transverse leaf spring (260) itself forming the joint, and the wheel-carrier-side end region of the transverse leaf spring (260) being in the form of a joint for this purpose.

8. An axle (100, 200, 300, 400, 500) according to one of the preceding claims, **characterised in that** the damper strut (140) is attached under preload by the damper tube (142) to the wheel carrier (120), based on a functionally installed state of the axle (100, 200, 300, 400, 500) in a motor vehicle, preferably under preload with a counter moment (M_{K}) which acts about a vehicle longitudinal axis (x) and which at least partially counteracts a transverse force (F_{Q}) generated owing to occurring wheel loads (F_{R}) and directed towards the vehicle centre and running through the first effective kinematic point (KP1) and acting on the damper strut (140).

9. An axle (400, 500) according to one of the preceding claims, **characterised in that** the axle (400, 500) has, on each side of the vehicle, one wheel carrier (120) and one damper strut (140) and one Watt's linkage which is coupled to the transverse leaf spring (460, 560) and which is coupleable to the vehicle body, the two damper struts (140) being coupled to one another by the transverse leaf spring (460, 560), and the transverse leaf spring (460, 560) being attachable by at least one bearing (461) to the vehicle body, the bearing (461) being configured for supporting the transverse leaf spring (160, 260, 360, 460, 560) in the vehicle vertical direction (z) and simultaneously permitting a compensation of a movement of the transverse leaf spring (460, 560) in the vehicle transverse direction (y) during compression and/or rebound movements, the Watt's linkage being configured to be coupled to the transverse leaf spring (460, 560) and coupleable to the vehicle body, such that, in a functionally installed state of the axle (400, 500) in a two-track motor vehicle, a movement of the transverse leaf spring (460, 560) in the vehicle transverse direction (y) caused by forces acting on the transverse leaf spring (460, 560) is prevented or is limited to a defined, maximum admissible transverse movement.

10. A two-track motor vehicle having an axle (100, 200, 300, 400, 500), **characterised in that** the axle (100, 200, 300, 400, 500) is configured according to one of claims 1 to 9.

## Revendications

1. Essieu (100, 200, 300, 400, 500) destiné à des roues (130) d'un véhicule automobile à deux lignes de roues, cet essieu (100, 200, 300, 400, 500) comportant, sur chaque côté du véhicule, un support de roues (120), une jambe d'amortissement (140), un bras de suspension transversal (150) et un ressort à lames transversal de guidage de roue (160, 260, 360, 460, 560) au moins partiellement latéralement et/ou dans la direction longitudinale du véhicule,
la jambe d'amortissement (140) comportant un tube d'amortissement (142) et un piston d'amortissement (141) mobile dans le tube d'amortissement (142) le long d'un axe d'amortissement longitudinal (DA), la jambe d'amortissement (140) étant connectée par le tube d'amortissement (142) sur le support de roues (120) et s'appuyant sur ce support de roues (120) au niveau d'un premier point cinématique actif (KP1), le bras de suspension transversal (150) ayant une zone d'extrémité du côté du support de roues et étant connecté sur le support de roues (120) par la zone d'extrémité du côté du support de roues et s'appuyant sur ce support de roues au niveau d'un second point cinématique actif (KP2), et le ressort à lames transversal (160, 260, 360, 460, 560) s'étendant, à l'état de montage fonctionnel de l'essieu (100, 200, 300, 400, 500) dans un véhicule automobile à deux lignes de roues, essentiellement dans la direction transversale (y) du véhicule et comportant au moins une zone d'extrémité du côté du support de roues,
**caractérisé en ce que**
le ressort à lames transversal (160, 260, 360, 460, 560) est connecté sur la jambe d'amortissement (140) par sa zone d'extrémité du côté du support de roues et s'appuie sur la jambe d'amortissement (140) au niveau d'un troisième point cinématique actif (KP3),
le ressort à lames transversal (160, 260, 360, 460, 560) étant connecté sur la jambe d'amortissement (140) par sa zone d'extrémité du côté du support de roues dans la zone du tube d'amortissement (142).

2. Essieu (100, 200, 300, 400, 500) conforme à la revendication 1,
**caractérisé en ce que**
le ressort à lames transversal (160, 260, 360, 460, 560) est connecté à la jambe d'amortissement (140) dans la zone de l'extrémité inférieure du tube d'amortissement (142) ou dans la zone de l'extrémité supérieure du tube d'amortissement (142).

3. Essieu (300) conforme à la revendication 1 ou 2,
**caractérisé en ce que**
le ressort à lames transversal (360) est connecté sur la jambe d'amortissement (140) à la hauteur du premier point cinématique actif (KP1), dans la direction de la hauteur du véhicule par rapport à l'état de montage fonctionnel de l'essieu (300) dans un véhicule automobile, et de préférence le troisième point cinématique (KP3) et situé à la hauteur du premier point cinématique (KP1).

4. Essieu (100, 200, 300, 400, 500) conforme à l'une des revendications précédentes,
**caractérisé en ce que**
le ressort à lames transversal (160, 260, 360, 460, 560) est connecté sous précontrainte sur la jambe d'amortissement (140), par rapport à l'état de montage fonctionnel de l'essieu (100, 200, 300, 400, 500) dans un véhicule automobile, de préférence sous précontrainte avec un couple antagoniste (M_{K}) agissant autour de l'axe longitudinal (x) du véhicule qui s'oppose au moins partiellement à une force transversale (F_{Q}) créée par les charges de roue (F_{R}) qui apparaissent, dirigée vers le centre du véhicule, passant par le premier point cinématique actif (KP1), et agissant sur la jambe d'amortissement (140).

5. Essieu (100, 200, 300, 400, 500) conforme à l'une des revendications précédentes,
**caractérisé en ce que**
le ressort à lames transversal (160, 260, 360, 460, 560) est articulé sur la jambe d'amortissement (140).

6. Essieu (100, 300, 400, 500) conforme à la revendication 5,
**caractérisé en ce que**
le ressort à lames transversal (160, 360, 460, 560) est articulé sur la jambe d'amortissement (140) par une articulation (162, 362, 462), cette articulation (162, 362, 462) étant de préférence une articulation à rotule ou une articulation à pivot qui permet une connexion sous précontrainte, en particulier une connexion sous précontrainte avec un couple antagoniste (M_{K}) agissant autour de l'axe longitudinal (x) du véhicule, qui s'oppose au moins partiellement à une force transversale (F_{R}) créée par des charges de roue (F_{R}) qui apparaissent, dirigée vers le centre du véhicule, passant par le premier point cinématique actif (KP1) et agissant sur la jambe d'amortissement (140).

7. Essieu (200) conforme à la revendication 5,
**caractérisé en ce que**
le ressort à lames transversal (260) est connecté à la jambe d'amortissement (140) au moyen d'une articulation, le ressort à lames transversal (260) formant lui-même l'articulation, et à cet effet, la zone d'extrémité du côté du support de roues du ressort à lames transversal (260) est réalisée sous la forme d'une articulation.

8. Essieu (100, 200, 300, 400, 500) conforme à l'une des revendications précédentes,
**caractérisé en ce que**
la jambe d'amortissement (140) est connectée sur support de roues (160) sous précontrainte par le tube d'amortissement (142), par rapport à l'état de montage fonctionnel de l'essieu (100, 200, 300, 400, 500) dans un véhicule, de préférence sous précontrainte avec un couple antagoniste (M_{K}) agissant autour de l'axe longitudinal (x) qui s'oppose au moins partiellement à une force transversale (F_{R}) du véhicule, créée par des charges de roue (F_{R}) qui apparaissent, orientée vers le centre du véhicule, passant par le premier point cinématique actif (KP1), et agissant sur la jambe d'amortissement (140).

9. Essieu (400, 500) conforme à l'une des revendications précédentes,
**caractérisé en ce qu'**
il comporte respectivement un support de roues (120) et une jambe d'amortissement (140) sur chaque côté du véhicule et une tringlerie de watt couplée au ressort à lames transversal (460, 560) et pouvant être couplée à la carrosserie du véhicule, les deux jambes d'amortissement (140) étant couplées l'une à l'autre par l'intermédiaire du ressort à lames transversal (460, 560) et le ressort à lames transversal (460, 560) pouvant être couplé à la carrosserie du véhicule par l'intermédiaire d'au moins un palier (461), le palier (461) étant réalisé pour supporter le ressort à lames transversal (160, 260, 360, 460, 560) dans la direction (z) de la hauteur du véhicule, et permettant simultanément en cas de compression de détente et/ou élastique une compensation du mouvement du ressort à lames transversal (460, 560) dans la direction transversale (y) du véhicule, la tringlerie de watt étant réalisée, couplée au ressort à lames transversal (460, 560) et susceptible d'être couplée à la carrosserie du véhicule de façon à empêcher, à l'état de montage fonctionnel de l'essieu (400, 500) dans un véhicule automobile à deux lignes de roues, un déplacement du ressort à lames transversal (460, 560) dans la direction transversale (y) du véhicule provoqué par des forces agissant sur ce ressort à lames transversal (460, 560), ou à le limiter à un déplacement transversal admissible maximum défini.

10. Véhicule automobile à deux lignes de roues comportant un essieu (100, 200, 300, 400, 500),
**caractérisé en ce que**
l'essieu (100, 200, 300, 400, 500) est réalisé conformément à l'une des revendications 1 à 9.
